(19) Europäisches Patentamt / European Patent Office / Office européen des brevets

(11) **EP 2 628 561 A1**

(12) **EUROPEAN PATENT APPLICATION**
published in accordance with Art. 153(4) EPC

(43) Date of publication:
**21.08.2013 Bulletin 2013/34**

(51) Int Cl.:
**B23K 11/25** (2006.01)　　**B23K 31/00** (2006.01)
**G06T 3/00** (2006.01)

(21) Application number: **11832543.0**

(22) Date of filing: **12.10.2011**

(86) International application number:
**PCT/JP2011/073379**

(87) International publication number:
**WO 2012/050108 (19.04.2012 Gazette 2012/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2010　JP 2010231343**

(71) Applicant: **Nippon Steel & Sumitomo Metal Corporation**
**Tokyo 100-8071 (JP)**

(72) Inventors:
- **ANAYAMA Kazunori**
  **Osaka-shi**
  **Osaka 541-0041 (JP)**
- **SUZUMA Toshiyuki**
  **Osaka-shi**
  **Osaka 541-0041 (JP)**

- **NISHIBATA Hitomi**
  **Osaka-shi**
  **Osaka 541-0041 (JP)**
- **FUJIMOTO Hiroki**
  **Osaka-shi**
  **Osaka 541-0041 (JP)**
- **FUKUI Kiyoyuki**
  **Osaka-shi**
  **Osaka 541-0041 (JP)**
- **UCHIHARA Masato**
  **Osaka-shi**
  **Osaka 541-0041 (JP)**

(74) Representative: **Zimmermann & Partner**
**Josephspitalstr. 15**
**80331 München (DE)**

(54) **WELDING QUALITY DETERMINATION DEVICE**

(57)　The welding quality classification apparatus relating to the present invention is an apparatus, wherein a data point indicating feature information of a welded joint to be classified whose welding quality is unknown is mapped to a point in a mapping space which has a dimensional number higher than the number of the features constituting the feature information, and the welding quality of a welded joint to be classified is classified based on which of regions of two welding qualities, which are formed by separating the mapping space with a decision boundary, contains the mapped point, and wherein a discriminant function is determined by adopting a weight which minimizes the sum of the classification error corresponding to classification accuracy of a training dataset and a regularization term having a positive correlation with the dimensional number of the discriminant function as weight for each feature constituting the discriminant function indicating the decision boundary.

Figure 4

EP 2 628 561 A1

**Description**

[Technical Field]

The present invention relates to a welding quality classification apparatus for classifying welding quality of a welded joint. Particularly, the present invention relates to a welding quality classification apparatus which is suitably used for classifying welding quality such as the presence/absence of a welding defect that occurs in spot welding of metallic materials.

[Background Art]

For example, in a manufacturing line of automobile parts, it is possible to measure time series variation of voltage (welding voltage) and current (welding current) between electrodes of a spot welding machine disposed in the manufacturing line by means of various measurement instruments. Since a nugget (an ellipsoidal melted and solidified portion) of a welded joint is formed by the heat generated by electrical resistance between the electrodes, when a poor formation of the nugget occurs, a minute variation occurs in the above described welding current and welding voltage. Particularly, in spot welding, since the welding current and welding voltage show a unique transition phenomenon from an early period of welding, in which an initial contact resistance has occurred, toward a nugget formation/growth process in a later stage of welding, it is conceivable that monitoring these signals allows to read out a change leading to a deterioration of welding quality.

Previously, as an apparatus for evaluating welding quality of a welded joint by utilizing the change in welding current and welding voltage, for example, apparatuses described in Patent Literatures 1 to 4 have been proposed.

Patent Literature 1 proposes a resistance spot welding quality monitoring apparatus, in which welding current and inter-electrode voltage which vary every moment during welding are detected at least once per a half cycle, and a time differential variation of electric power is sequentially monitored, the differential electric power being obtained by subtracting, from the electric power applied to a work in a decreasing process of inter-electrode electric power corresponding to a predetermined same current value in an increasing process and the decreasing process of the welding current per each half cycle, the electric power applied to the work in the increasing process. Then, in the apparatus described in Patent Literature 1, a curve indicating the behavior of differential electric power is expressed on a cycle diagram, in which the differential electric power is taken as the ordinate and a cycle number as the abscissa, and the evaluation of welding quality during a welding nugget growth process is performed from the change in the differential electric power at a measurement reference point of an arbitrary specified cycle number on the abscissa.

The apparatus described in Patent Literature 1 does not disclose any concrete method for determining the measurement reference point in spite of that the evaluation result will depend on the settings of measurement reference point is determined. Moreover, the apparatus described in Patent Literature 1 is unable to accurately evaluate welding quality since the learning (creation of a decision boundary for classifying welding quality) by use of the data of a welded joint whose actual welding quality is known by a destructive test, etc. has not been carried out. Further, although the apparatus described in Patent Literature 1 is able to classify whether or not the growth of a nugget is in a stable condition, there is a case in reality where the diameter of the nugget has already exceeded an industrially required size (that is, welding quality is good) even if the nugget is in a growing process (even if the growth of the nugget is not in a stable condition). The apparatus described in Patent Literature 1 has a risk of classifying the welding quality to be poor when the nugget is in a growing process even if the welding quality is good in reality as described above.

Patent Literature 2 proposes a welding quality monitoring apparatus of resistance welding, which includes: means for inputting the shape and material of a material to be welded; means for detecting a welding current and a voltage between electrodes; means for calculating a temperature of the material to be welded based on a heat conduction model from both detection results and estimating an estimated nugget diameter A from the distribution of the calculated temperature; means for inputting a reference nugget diameter A which is necessary to ensure welding strength of the material to be welded; and means for comparing the estimated nugget diameter A with the reference nugget diameter A and outputting the comparison result.

Since the apparatus described in Patent Literature 2 is configured to calculate the temperature of a welded joint based on a heat conduction model from the welding current and the welding voltage (voltage between electrodes), and thereby estimate the nugget diameter of the welded joint, the evaluation result of welding quality will depend on the accuracy of the heat conduction model. Moreover, to perform a highly accurate calculation based on the heat conduction model, it is necessary to acquire a huge amount of data such as the specific heat and resistance information of various kinds of materials to be welded in heating process, thus requiring time and effort. Moreover, as the accuracy of the calculation increases, the calculation time naturally increases, which is not suitable for monitoring the welding quality on line. Further, in the apparatus described in Patent Literature 2 as well, since the learning (creation of a decision boundary for classifying welding quality) by use of the data of a welded joint whose actual welding quality is known by a destructive test, etc. is not carried out, it is not possible to accurately evaluate welding quality.

Patent Literature 3 proposes a quality evaluation apparatus for a resistance welded joint, comprising: welding current measuring means for detecting a welding current; inter-electrode voltage detecting means for detecting a voltage between electrodes; inter-electrode dynamic resistance calculating means for calculating apparent dynamic resistance between electrodes from the detected values of both the detecting means; calculating means of change rate of dynamic resistance instantaneous value, which calculates a change rate of dynamic resistance instantaneous value of the dynamic resistance between electrodes in a current changing period in which instantaneous value of welding current during welding changes; recorder means for sequentially recording the dynamic resistance between electrodes and the change rate of dynamic resistance instantaneous value; and computing means for performing the computation to judge welding quality by using the stored change rate of dynamic resistance instantaneous value.

In the apparatus described in Patent Literature 3 as well, since the learning (creation of a decision boundary for classifying welding quality) by use of the data of a welded joint whose actual welding quality is known by a destructive test, etc. is not carried out, it is not possible to accurately evaluate welding quality. Moreover, in the apparatus described in Patent Literature 3, although the judgment criterion for the time of nugget formation is clear, it is industrially necessary to judge the finally obtained nugget diameter or to judge whether or not the nugget diameter has a necessary size. Patent Literature 3 describes that the size of a nugget may be determined by using an absolute value of the change rate of dynamic resistance instantaneous value and an elapsed time thereof (line 43 to 44 in the right column of page 3 of Patent Literature 3); however, it does not explicitly show a concrete method thereof. Further, since an increase in the resistance of the material to be welded itself associated with a temperature increase, as well as a decrease in the dynamic resistance between electrodes due to expansion of the contact area (welding area) between the materials to be welded occurs during welding, it is conceivably difficult to evaluate the welding quality in a later stage of welding (to calculate a nugget diameter based on the change rate of dynamic resistance instantaneous value).

Patent Literature 4 proposes an apparatus for welding assessment during operating time, comprising: first sampling method to measure welding voltage or welding current to calculate a sequence of values for a first signal; second sampling method of sample a welding voltage or welding current to calculate a sequence of values for a second signal; signal generating method to generate one or more sequences of values for one or more artificial third signals from the first and second signals, wherein the artificial third signals are dependent upon values of the first and second signals, by means of generalized discrete point convolution operations; tripling means to identify corresponding values of the first, second and third signals as triplets; and collection means to collect triplets of values which are useful for quality monitoring and categorize them into groups or regions.

To be specific, in the apparatus described in Patent Literature 4, welding current/welding voltage signals when a good welding quality is obtained are stored as sample signals. Then, in the apparatus described in Patent Literature 4, artificial signals are calculated, which are generated by multiplying the stored sample signals with a specified coefficient. In the apparatus described in Patent Literature 4, the artificial signals and the sample signals are plotted in a three dimensional space, and the plotted region is divided into smaller regions, and the number of plotted points in each smaller region is counted. In the apparatus described in Patent Literature 4, the number of points is multiplied by a weight which is set for each smaller region to generate a reference signal. In the apparatus described in Patent Literature 4, an average and variance of the reference signal are calculated and, based on these, a probability density function of the welding current/welding voltage signals inputted during on-line inspection is calculated and detect welding defect in case of its probability density value is low (not more than $10^{-4}$).

In spot welding, the front edge of electrode wears as the number of welding points increases. However, in a commonly used spot welding machine, it is possible to form a good nugget for over consecutive several hundreds of welding points by using the same electrode even if the electrode wears. On the other hand, as the electrode goes on wearing, the welding current/welding voltage goes on changing gradually. Accordingly, the welding current/welding voltage signal varies to some extent even if the welding quality keeps good. The judgment criterion on whether the welding quality is good or bad in the apparatus described in Patent Literature 4 depends on a reference signal under an ideal welding condition. Therefore, when the welding current/welding voltage signal undergoes a subtle change as described above, it moves out of the range of the reference signal, leading to a high risk of false judgment of welding quality.

Moreover, in the apparatus described in Patent Literature 4, artificial signals are calculated according to a specific coefficient from sample signals under an ideal welding condition. The specific coefficient value is empirically calculated based on many experiments, and such coefficient must be set for each welding condition inevitably requiring the involvement of an expert in statistical analysis.

While all the conventional welding quality evaluation apparatuses of a welded joint, which have been described so far, utilize changes in the welding current and welding voltage, besides those, it is conceivable that welding quality is evaluated by utilizing the change in electrode welding force and the displacement of electrode during welding operation. Which will be described specifically below.

The material to be welded thermally expands as a result of an increase in temperature of the material to be welded during welding. On account of this, the electrode welding force increases under a condition in which the distance between the electrodes interposing the material to be welded is kept constant. On the other hand, the distance between the electrodes increases (a displacement of electrode occurs) under a condition in which the electrode welding force is kept substantially constant. Thus, as a result of an increase in temperature of the material to be welded during welding, a change in the electrode welding force or a displacement of electrode will occur. Moreover, when expulsion (scattered molten metal) is generated, a rapid change in electrode welding force and a sharp displacement of electrode may occur due to occurrences of a rapid expansion of the welded joint and a succeeding reduction in the thickness of the welded joint. In this way, since the change in electrode welding force and the displacement of electrode during welding include information of the thermal expansion of the material to be welded, that is, the heat build-up state in the material to be welded, it is conceivable that utilizing those information allows the evaluation of the welding quality of welded joint.

Previously, as an apparatus and method for evaluating welding quality of a welded joint by utilizing the change in electrode welding force and the displacement of electrode, for example, the apparatuses and methods described in Patent Literatures 5 and 6 have been proposed.

Patent Literature 5 proposes a monitoring apparatus for a resistance welding machine with the monitoring apparatus comprising: a force sensor provided on one of the electrodes and for detecting force; means for calculating a differential area between a set force corresponding to the force during welding and a time-change locus of the output of the pressure sensor; and means for outputting and displaying a nugget diameter corresponding to the calculated differential area.

Moreover, Patent Literature 6 proposes a method for estimating welding quality in spot welding, comprising: a welding quality data acquisition step to acquire correlation data between the displacement quantity of the electrode and welding strength with a number of welding, which is referenced to a fresh electrode, as a parameter; a correlation data change analysis step to analyze the relationship between the change in the characteristic of the correlation data and the number of welding; a welding step to estimate welding strength and execute welding based on the displacement quantity of the electrode obtained from the correlation data change analysis step and the number of welding, wherein the welding strength to be obtained by the welding step is controlled.

However, in the apparatus described in Patent Literature 5 and the method described in Patent Literature 6, since the learning (creation of a decision boundary for classifying the welding quality) by use of the data of a welded joint whose actual welding quality is known by a destructive test, etc. is not performed, it is not possible to accurately evaluate welding quality.

[Citation List]

[Patent Literature]

    [Patent Literature 1] JP2006-110554A
    [Patent Literature 2] JP6-170552A
    [Patent Literature 3] JP10-314956A
    [Patent Literature 4] JP2003-516863A
    [Patent Literature 5] JP1-271078A
    [Patent Literature 6] JP7-290254A

[Summary of Invention]

[Technical Problem]

Accordingly, the present invention has its objective to provide a welding quality classification apparatus which is able to classify welding quality with relative ease and high accuracy.

[Solution to Problem]

In order to achieve the objective, the present invention provides a welding quality classification apparatus in which a data point indicating feature information whose components include a plurality of features, the plurality of features being obtained based on at least one of physical values including welding current, welding voltage, welding force of welding electrode, and displacement of welding electrode when a welded joint to be classified whose welding quality is unknown is welded, is mapped to a point in a mapping space which has a dimensional number higher than the number of the features constituting the feature information, and determination is made as to which of regions of two welding qualities, which are formed by separating the mapping space, contains the mapped point to classify the welding quality of the welded joint to be classified to be a welding quality corresponding to the region where the mapped point is located, the welding quality classification apparatus comprising:

an acquisition section for acquiring the features; a determination section for determining a discriminant function indicating a decision boundary which separates the mapping space; and a classification section for classifying the welding quality of the welded joint to be classified based on an output value of the discriminant function when the feature information of the welded joint to be classified is inputted into the discriminant function determined by the determination section; wherein

the acquisition section comprises a detection portion for detecting at least one of physical quantities including welding current, welding voltage, welding force of welding electrode, and displacement of welding electrode when the welded joint to be classified is welded, and a feature extraction portion for extracting the features based on physical quantities detected by the detection portion,

each of the two welding qualities is a predetermined and mutually different welding quality,

the determination section determines the discriminant function by using the feature information of a training dataset which is known to have either one of the two welding qualities,

the discriminant function is a function that consists of a kernel function k(x, x') which outputs a mapped point of a training dataset whose feature information is inputted when the feature information of the training dataset having either one or the other welding quality of the two welding qualities is inputted, and a weight of each feature constituting the feature information, which is attached to the kernel function k(x, x'), and

the kernel function k(x, x') is a kernel function in which a matrix K whose elements are given as k(x, x') is positive semi-definite, x is the feature information of a training dataset having one of the welding qualities, and x' is the feature information of a training dataset having the other of the welding qualities, wherein

the determination section:

determines the weight of each feature constituting the feature information for a predetermined regularization parameter so as to minimize the value of an error function, which consists of a sum of: classification error which is defined by the difference between the output value of the discriminant function when the feature information of the training dataset having one of the welding qualities is inputted into the kernel function k(x, x') and the value corresponding to the one of the welding qualities, and the difference between the output value of the discriminant function when the feature information of the training dataset having the other of the welding qualities is inputted into the kernel function k(x, x') and the value corresponding to the other of the welding qualities, decreases as the absolute value of either one of the two differences decreases, and increases as the absolute value increases; and a regularization term multiplied by the regularization parameter, wherein the regularization term has a positive correlation with the dimensional number of the discriminant function, and varies according to the weight of each feature constituting the feature information, and

when the weight of each feature constituting the feature information which has been determined to minimize the value of the error function is temporarily adopted as the weight of each feature constituting the discriminant function,

if the number of misclassification, which is the sum of the number of training dataset having one of the welding qualities, for which the absolute value of the difference between the output value of the discriminant function when the feature information of a training dataset having one of the welding qualities is inputted into the kernel function k(x, x') and the value corresponding to the one of the welding qualities is smaller than the absolute value of the difference between the output value of the discriminant function when the feature information of a training dataset having one of the welding qualities is inputted into the kernel function k(x, x') and the value corresponding to the one of the welding qualities, and the number of training dataset having the other of the welding qualities for which the absolute value of the difference between the output value of the discriminant function when the feature information of a training dataset having the other of the welding qualities is inputted into the kernel function k(x, x') and the value corresponding to the one of the welding qualities is smaller than the absolute value of the difference between the output value of the discriminant function when the feature information of a training dataset having the other of the welding qualities is inputted into the kernel function k(x, x') and the value corresponding to the other of the welding qualities, is not less than a predetermined value; adjusts the regularization term parameter to determine the weight of each feature constituting the feature information again so as to minimize the value of the error function, and

if the number of misclassification is less than the predetermined value; ascertains that the weight of each feature constituting the feature information which has been determined so as to minimize the value of the error function is adopted as the weight of each feature constituting the discriminant function to determine the discriminant function.

The welding quality classification apparatus relating to the present invention performs mapping of a welded joint to be classified having an unknown welding quality to a point in a mapping space having a higher-order dimension, and determines which of regions of two welding qualities, which are formed by separating the mapping space, contains the mapped point. Then, the welding quality classification apparatus relating to the present invention classifies that the welding quality of a welded joint to be classified is the welding quality corresponding to the region where the mapped point of the welded joint to be classified is located, out of the two regions of welding qualities. The welding quality classification apparatus relating to the present invention determines the discriminant function which indicates the decision boundary separating the mapping space in the following manner.

The welding quality classification apparatus relating to the present invention, first, determines the weight of each feature constituting feature information for a predetermined regularization parameter such that the value of an error function consisting of the sum of a classification error and a regularization term multiplied by the regularization parameter. Then, the welding quality classification apparatus relating to the present invention ascertains that if the number of misclassification when the weight of each feature constituting the feature information which is determined so as to minimize the value of the error function is temporarily adopted as the weight of each feature constituting the discriminant function is less than a predetermined value, the determined weight is adopted as the weight of each feature constituting the discriminant function to determine the discriminant function.

To decrease the value of the error function which consists of the sum of the classification error and the regularization term multiplied by the regularization parameter, it is necessary to decrease at least either one of the classification error and the regularization term. For example, when the regularization parameter is large, the effect of the regularization term on the value of the error function is dominant. The regularization term varies according to the weight of each feature constituting feature information. For this reason, when the regularization parameter is large, the weight to make the regularization term sufficiently small is determined as the weight to minimize the value of the error function. The dimensional number of the discriminant function and the regularization term have a positive correlation with each other. For this reason, the weight to make the regularization term sufficiently small is determined as the weight to minimize the value of the error function, and it is determined that the concerned weight is adopted as the weight of each feature constituting the discriminant function to determine the discriminant function so that excessive increase in the dimensional number of the discriminant function is suppressed and over-fitting (a phenomenon that if a training dataset whose feature has a singular value is present in a training dataset to be used to create a decision boundary (discriminant function), a decision boundary (discriminant function) having an excessively high-order dimension is created such that the welding quality is accurately judged even for a training dataset whose feature has a singular value) is suppressed. Therefore, the welding quality classification apparatus relating to the present invention can suppress over-fitting.

If the number of misclassification when the weight which is determined to minimize the value of the error function is temporarily adopted as the weight of each feature constituting the discriminant function is not less than a predetermined value, the welding quality classification apparatus relating to the present invention performs adjustment of regularization parameter to again determine the weight to minimize the value of the error function. If the regularization parameter is decreased as the result of the above described adjustment of the regularization parameter, while the effect of the regularization term on the value of the error function decreases, the effect of the classification error on the error function increases. Thus, adjustment to decrease the regularization parameter will result in that the weight to decrease the classification error becomes more able to be determined as the weight to minimize the value of the error function than before adjustment. The classification error is defined by the difference between the output value of the discriminant function when the feature information of a training dataset having one welding quality is inputted into the kernel function $k(x, x')$ (referred to as an "output value of the discriminant function corresponding to the one welding quality") and the value corresponding to the one welding quality, and the difference between the output value of the discriminant function when the feature information of a training dataset having the other welding quality is inputted into the kernel function $(x, x')$ (referred to as an "output value of the discriminant function corresponding to the other welding quality") and the value corresponding to the other welding quality. Further, the classification error decreases as either of the absolute values of the difference between the output value of the discriminant function corresponding to the one welding quality and the value corresponding to the one welding quality, and of the difference between the output value of the discriminant function corresponding to the other welding quality and the value corresponding to the other welding quality decreases, and increases as it increases. That is, if the classification error decreases, either the absolute value of the difference between the output value of the discriminant function corresponding to the one welding quality and the value corresponding to the one welding quality, or the absolute value of the difference between the output value of the discriminant function corresponding to the other welding quality and the value corresponding to the other welding quality decreases. If the absolute value of the difference between the output value of the discriminant function corresponding to one welding quality and the value corresponding to the one welding quality decreases, the number of training dataset having one welding quality, for which the absolute value of the difference between the output value of the discriminant function corresponding to the one welding quality and the value corresponding to the other welding quality becomes larger than the concerned absolute value, decreases. Similarly, if the absolute value of the difference between the output value of the discriminant function corresponding to the other welding quality and the value corresponding to the other welding quality decreases, the number of training dataset having the other welding quality, for which the absolute value of the difference between the output value of the discriminant function corresponding to the other welding quality and the value corresponding to the one welding quality becomes larger than the concerned absolute value, decreases. Therefore, as the classification error decreases, the number of misclassification decreases. Therefore, even if the number of misclassification when the weight determined before the adjustment of the regularization parameter is temporarily adopted as the weight of each feature constituting the discriminant function is not less than a predetermined value, by adjusting such that the regularization parameter decreases, it is possible to determine the weight for which the number of misclassification becomes less than a predetermined value, ascertain that the determined weight is adopted as the weight of each feature constituting the discriminant function, and determine the discriminant function.

As described so far, only when the weight, for which the number of misclassification when temporarily adopted as the weight of each feature constituting the discriminant function is less than the predetermined value, is determined out of the weight determined to minimize the value of the error function, the welding quality classification apparatus relating to the present invention ascertains that the determined weight is adopted as the weight of each feature constituting the discriminant function, and determines the discriminant function. Therefore, the welding quality classification apparatus relating to the present invention can accurately classify the welding quality. However, as the regularization term increases, the possibility of over-fitting is increased. For this reason, for example, the regularization parameter is increased in initial stages, and when the weight by which the number of misclassification becomes less than the predetermined value cannot be determined, it is preferable to determine the weight for which the number of misclassification becomes less than the predetermined value by adjusting that the regularization parameter gradually decreases. Moreover, the above described classification error is set to be a value having a positive correlation with, for example, the sum of squares of the difference between the output value of the discriminant function corresponding to the one welding quality and the value corresponding to the one welding quality, and the difference between the output value of the discriminant function corresponding to the other welding quality and the value corresponding to the other welding quality. A value having a positive correlation with the above described sum of squares is set to be, for example, the square root of the above described sum of squares.

Moreover, the discriminant function consists of a kernel function $k(x, x')$ and the weight of each feature, and has no mapping function.

For this reason, there is no need of calculating a mapping function to determine the discriminant function. The computational complexity of calculating a mapping function is enormous. Therefore, the welding quality classification apparatus according to the present invention, which does not need to calculate a mapping function, can determine a discriminant function with a small computational complexity.

Further, since the welding quality classification apparatus relating to the present invention automatically determines a discriminant function by using feature information of a training dataset which is known to have either one of the two welding qualities, there is no need of the involvement of an expert in statistical analysis as with the apparatus described in Patent Literature 4, and it is possible to classify welding quality with relative ease.

Note that the concept of "two welding qualities" in the present invention includes, besides a state of good welding and a state of poor welding (for example, welding is in a good state when the nugget diameter of a welded joint is larger than predetermined threshold value, and welding is in a poor welding state when the nugget diameter is not more than the threshold value), for example, a state in which the electrode needs to be replaced, and a state in which the electrode does not need to be replaced. Moreover, the concept of "two welding qualities" includes welding qualities which are in the same state in the viewpoint of poor welding, but have different causing factors of poor welding.

Moreover, the term "value corresponding to welding quality" in the present invention is a value predetermined so as to be able to classify one welding quality from the other welding quality, and different values are set for one welding quality and for the other welding quality.

Moreover, the term "feature information of a training dataset" in the present invention indicates feature information whose components include a plurality of features obtained based on at least one of physical values including the welding current, welding voltage, welding force of welding electrode, and displacement of welding electrode when the training dataset is welded.

Further, the term "a plurality of features obtained based on physical value" in the present invention will not be limited to features obtained from at least one of physical values including the welding current, welding voltage, welding force of welding electrode, and displacement of welding electrode, and will also include features obtained from the calculation result using the above described plurality of physical values. For example, the term "a plurality of features obtained based on physical quantity" in the present invention also includes features obtained from an welding resistance which is the result of dividing welding voltage by welding current.

Preferably, the classification section calculates, along with the welding quality of the welded joint to be classified which has been classified, a certainty factor of the classification result of the welded joint to be classified, the certainty factor being represented by a distance between a mapping point obtained by mapping a data point indicating feature information of the welded joint to be classified to the mapping space and the decision boundary separating the mapping space.

According to such preferable configurations, along with the classified welding quality of a welded joint to be classified, a certainty factor for the result of classification of the concerned welded joint to be classified is calculated. On that account, for example, when welding is classified to be in a good state, but the certainty factor thereof is low, it is possible to perform re-inspection of welding quality by means of another apparatus, or to indiscriminately regard the welding quality to be in a poor welding state, thereby preventing the risk of a poorly welded product being delivered.

[Advantageous Effects of Invention]

According to the welding quality classification apparatus relating to the present invention, it is possible to classify welding quality with relative ease and high accuracy.

[Brief Description of Drawings]

Figure 1 is a schematic configuration drawing of a welding quality classification apparatus relating to an embodiment of the present invention.

Figures 2A and 2B are explanatory diagrams to show the calculation procedure of fractal dimensions.

Figure 3 is a schematic view showing information relating to a training dataset.

Figure 4 is a flowchart showing the procedure to determine a discriminant function.

Figure 5 is a cross-sectional view to show the shape of a welded joint in classification test 1 by use of a welding quality classification apparatus of the present invention.

Figures 6A, 6B and 6C are explanatory diagrams to explain a method of judging actual welding quality in classification test 1.

Figures 7A and 7B are diagrams showing an example of the wear of electrodes and the change in the nugget diameter of the welded joint in spot welding in the classification test 1.

Figure 8 is a diagram showing an example of evaluation results of the classification test 1.

Figure 9 shows an example in which a welding quality of good welding is further categorized into a plurality of welding qualities.

Figure 10 shows an example in which a welding quality of poor welding is further categorized into a plurality of welding qualities.

Figure 11 is a schematic configuration drawing showing a variant of the welding quality classification apparatus relating to the present invention.

Figures 12A and 12B are explanatory diagrams to show the calculation procedure of features other than the fractal dimensions.

Figure 13 is a diagram showing a summary of classification test 2 by use of a welding quality classification apparatus of the present invention.

Figure 14 is a cross-sectional view to show the shape of a welded joint in the classification test 2.

Figures 15A, 15B and 15C are explanatory diagrams to explain the method of judging actual welding quality in the classification test 2.

Figures 16A and 16B are diagrams showing an example of the wear of electrode and the change in the nugget formation state of welded joint in spot welding in the classification test 2.

Figure 17 is a diagram showing an example of evaluation results of the classification test 2.

Figure 18 is a diagram showing another example of evaluation results of the classification test 2.

Figure 19 is a cross-sectional view to show the shape of a welded joint in classification test 3.

Figures 20A and 20B are diagrams showing an example of the change in the nugget diameter of a welded joint in spot welding in the classification test 2.

Figure 21 is a diagram showing an example of evaluation results of the classification test 3.

Figure 22 is a diagram showing another example of evaluation results of the classification test 3.

[Description of Embodiments]

Hereafter, referring to the appended drawings, an embodiment of the present invention will be described by exemplifying a case where welding quality in spot welding of metallic material is classified by using welding current and welding voltage. Note that in each Formula described in the present specification, parameters indicated by bold-faced italics represent vectors.

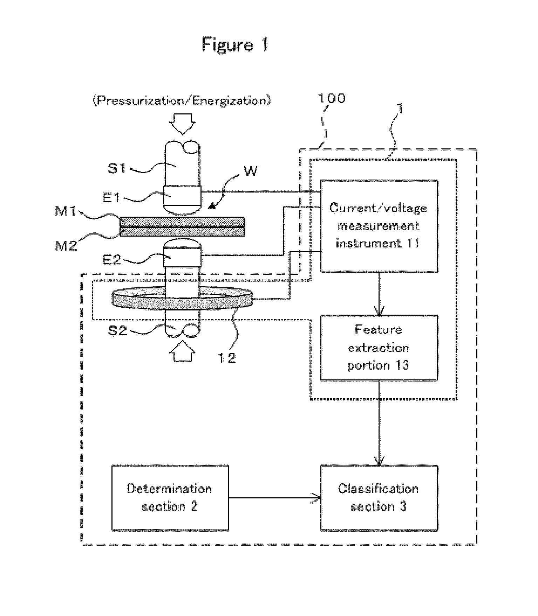

Figure 1 is a schematic configuration drawing of a welding quality classification apparatus 100 relating to the present embodiment. As shown in Figure 1, the welding quality classification apparatus 100 includes an acquisition section 1 for acquiring features, a determination section 2 for determining a discriminant function, and a classification section 3 for classifying welding quality.

The acquisition section 1 includes a current/voltage measurement instrument 11 and a toroidal coil 12 as a measurement portion for measuring a welding current and welding voltage upon spot-welding a welded joint W of materials to be welded M1 and M2 made of metal. The current/voltage measurement instrument 11 is electrically connected to a welding electrode E1 and a welding electrode E2, which constitutes a spot welding machine, respectively so that time series variation of welding voltage is measured. Moreover, the current/voltage measurement instrument 11 is connected to the coil 12 which is placed around the welding machine's shank S2 connected to one electrode E2 so that time series variation of welding current is measured. Moreover, the acquisition section 1 includes a feature extraction portion 13 for extracting features based on the welding current and/or welding voltage measured by the measurement portion (the current/voltage measurement instrument 11 and the coil 12). The feature extraction portion 13 of the present embodiment extracts features based on both the welding current and welding voltage.

As the features to be extracted by the feature extraction portion 13, it is possible to use, for example, results of applying signal processing, such as a fractal dimension analysis, Fourier analysis, and Wavelet analysis, to the signal waveforms of welding current and welding voltage to represent the characteristic of the time series signals corresponding to the welding quality of welding current and welding voltage which are measured by the measurement portion. The number of features which constitute feature information will not be specifically limited provided that the number is plural.

The feature extraction portion 13 of the present embodiment applies a fractal dimension analysis to signal waveforms of welding current and welding voltage, thereby extracting features.
A fractal dimension indicates the level of complexity of a time series signal waveform when regarding the signal waveform as a geometric structure. A larger fractal dimension indicates an increased level of complexity in signal waveform. When a fractal dimension analysis is applied to signal waveforms of welding current and welding voltage, it may be applied by regarding an entire signal waveform corresponding to one spot welding point as a continuous figure, or dividing the signal waveform into certain time intervals. When the fractal dimension analysis is applied with the signal waveform being divided into several time sections, fractal dimensions in the number corresponding to the number of time sections will be obtained.

A fractal dimension d of a time series signal waveform is given by the following Formula (A).

$$d = \lim_{\delta \to 0} \frac{\ln c - \ln N_\delta(S)}{\ln \delta} = -\lim_{\delta \to 0} \frac{\ln N_\delta(S)}{\ln \delta} \quad \cdots (A)$$

Where $c = \lim \dfrac{N_\delta(S)}{1/\delta^d}$

In the above described Formula (A), S denotes a sequence of data of signal waveform, $\delta$ denotes a box size, and $N_\delta(S)$ denotes a number of boxes which are needed for covering the signal waveform.

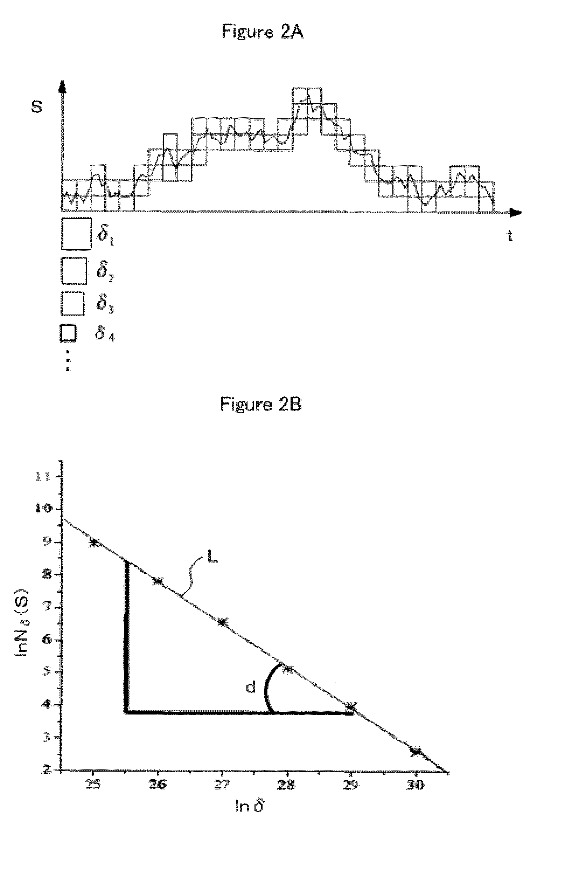

Hereafter, appropriately referring to Figures 2A and 2B, a concrete procedure to calculate the fractal dimension d will be described.
When calculating the fractal dimension d, the following first to fifth steps are carried out.

(1) 1st step: An appropriate box size $\delta$ larger than 0 is set.
(2) 2nd step: As shown in Figure 2A, the number of boxes $N_\delta(S)$ necessary for covering a signal waveform S is counted (Figure 2A shows an example, in which the signal waveform is covered by a box size $\delta_4$).
(3) 3rd step: As shown in Figure 2A, by repeating the 1st step and the 2nd step with the box size $\delta$ being changed (changed step-by-step into $\delta_1, \delta_2, \delta_3, \delta_4$ in the example shown in Figure 2A), the number of boxes $N_\delta(S)$ corresponding to each box size $\delta$ is calculated.
(4) 4th step: As shown in Figure 2B, a graph is drawn in which ln $\delta$ is plotted on the abscissa and ln $N_\delta(S)$ is plotted on the ordinate.
(5) 5th step: As shown in Figure 2B, an approximating straight line L is fitted to the graph drawn in the 4th step by a least squares method etc., and the slope thereof is calculated as the fractal dimension d.

Moreover, as the features to be extracted by the feature extraction portion 13, it is possible to adopt features as described below to further sufficiently represent the characteristic of the time series signals corresponding to the welding quality of the welding current and welding voltage detected by the detection portion.

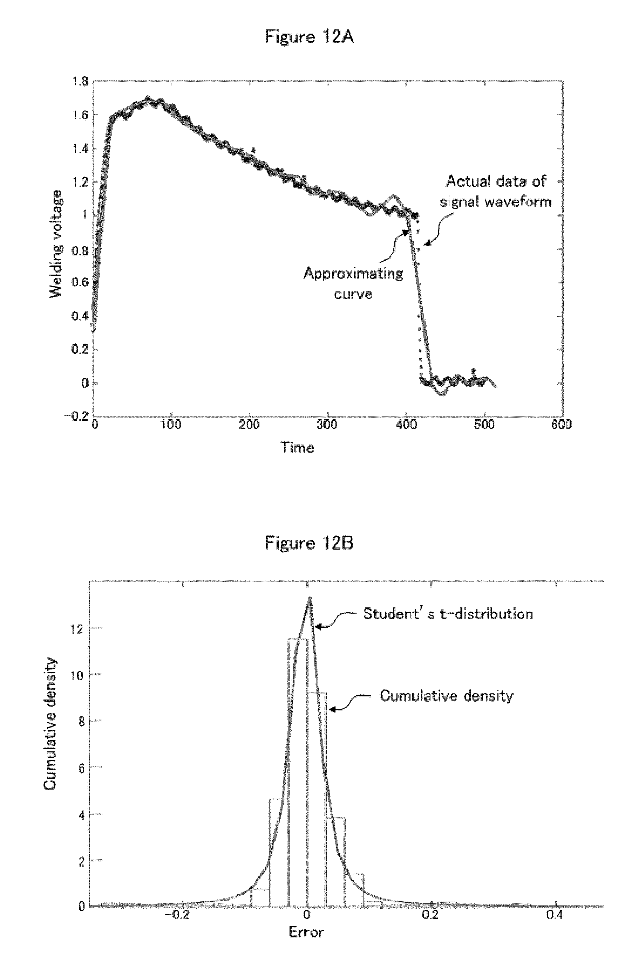

In spot welding, the signal waveforms of welding current and welding voltage exhibit a unique transitional phenomenon changing from a state in an early period of welding in which initial contact resistance occurs toward a nugget formation/growth process in a later period of welding in a macroscopic view as shown in Figure 12A. When a poor formation of nugget occurs, it is not always the case that a large change is observed in the signal waveforms of welding current and welding voltage in a macroscopic view, and when no large change is observed in a macroscopic view, it is conceivable that minute changes have occurred.

Accordingly, among the changes in signal waveform, by representing a macroscopic (fundamental) change by fitting an approximating curve (a higher order curve and a spline curve etc.) and representing minute variation by the error of the above described approximating curve for the signal waveform, that is, by treating the variation of signal waveform by decomposing it into two elements, it is conceivable that the information of signal waveform can be represented further in detail.

To be specific, features are extracted as described below.

(1) As shown in Figure 12A, an approximating curve is fitted to actual data of a signal waveform (welding voltage in the example shown in Figure 12A). In the example shown in Figure 12A, a 7th order curve is fitted.

(2) As shown in Figure 12B, supposing the error of the approximating curve with respect to the signal waveform (actual data of signal waveform) being as a parent population, Student's t-distribution with a degree of freedom $\nu$ represented by the following Formula (B) is fitted to the cumulative density distribution of the parent population. Upon performing this fitting, a maximum likelihood estimation is applied to a density function (likelihood function) represented by the following Formula (C) to determine the degree of freedom $\nu$ which is an unknown parameter. The likelihood function represented by Formula (C) is a function for measuring the goodness of fit of Student's t-distribution represented by Formula (B) fits to the cumulative density distribution of the parent population of actual data when the degree of freedom $\nu$ is set to a certain value. To be specific, in the above described maximum likelihood estimation, the degree of freedom $\nu$ is determined so as to maximize a log-likelihood function which is obtained by taking logarithm of the likelihood function shown by Formula (C). The degree of freedom $\nu$ thus determined is considered to be an estimate value of the degree of freedom $\nu$ at which the Student's t-distribution represented by Formula (B) best fits to the cumulative density distribution of the parent population of actual data.

$$f(z \mid \nu) = \frac{\Gamma\left(\frac{\nu+1}{2}\right)}{\Gamma\left(\frac{\nu}{2}\right)} \cdot \frac{1}{\sqrt{\nu\pi}} \cdot \left(1 + \frac{z^2}{\nu}\right)^{\frac{-(\nu+1)}{2}} \cdots (B)$$

$$f(z \mid \mu, \sigma, \nu) = \frac{\Gamma\left(\frac{\nu+1}{2}\right)}{\sigma\sqrt{\nu\pi} \cdot \Gamma\left(\frac{\nu}{2}\right)} \cdot \left[\frac{\nu + \left(\frac{z-\mu}{\sigma}\right)^2}{\nu}\right]^{\frac{-(\nu+1)}{2}} \cdots (C)$$

Where, in the above described Formulas (B) and (C), z denotes actual data (welding current and welding voltage) of feature information, and $\Gamma(\cdot)$ denotes a gamma distribution. Moreover, in the above described Formula (C), $\mu$ denotes a positional parameter, and $\sigma$ denotes a scale parameter ($\sigma > 0$). These parameters $\mu$ and $\sigma$ are values which can be estimated from the cumulative density distribution of parent population.

(3) The coefficient parameters of the approximating curve obtained in the above described (1) (for example, each coefficient Po to $P_{n-1}$ of an n-th order approximating curve $Pot + P_1t^2 + ...P_{n-1}t^n$, where t denotes time, and n = 7 in the example shown in Figure 12A), and parameters $\mu$, $\sigma$, and $\nu$ are adopted as the features.

The determination section 2 determines a discriminant function indicating a decision boundary for classifying the welding quality of a welded joint to be classified whose welding quality is unknown. This decision boundary separates a mapping space, which has a dimensional number higher than the number of features constituting feature information (a vector) whose components include a plurality of features obtained based on welding current and/or welding voltage (both welding current and welding voltage in the present embodiment) when the welded joint to be classified is welded, into regions of two welding qualities (hereafter, one of the two welding qualities is referred to as "welding quality A", and the other welding quality as "welding quality B"). Welding quality A and welding quality B are welding qualities which are set in advance by the user etc. of the welding quality classification apparatus 100 and are different from each other. Welding quality A and welding quality B may be set, for example, to be a state of good welding and a state of poor welding.

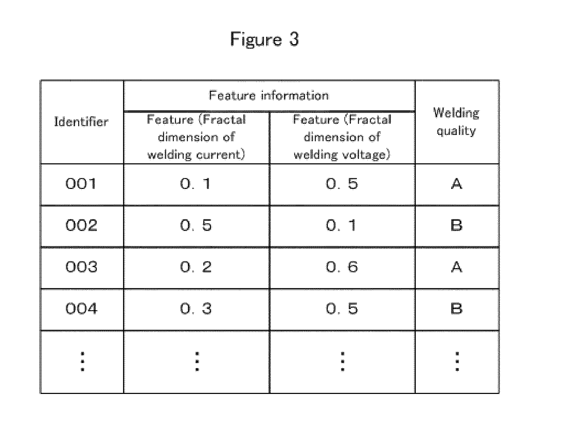

The determination section 2 determines a discriminant function by using feature information of a training dataset which is known to have either one of welding quality A and welding quality B. The feature information of the training dataset to be inputted to the determination section 2 is obtained, for example, by using features extracted by the above described feature extraction portion 13 of the acquisition section 1. The feature information of a training dataset having welding quality A, the feature information of a training dataset having welding quality B, and the feature information of the above described welded joint to be classified consist of the same kind of features. It is possible to know which of welding quality A and welding quality B a training dataset has by, for example, extracting features on the training dataset, and thereafter rupturing the training dataset to evaluate the nugget diameter thereof. As shown in Figure 3, each feature constituting the feature information of each training dataset having welding quality A, and each feature constituting the feature information of each training dataset having welding quality B are tied to an identifier of the training dataset and a welding quality of the training dataset and are stored in the determination section 2. Note that as shown in Figure 3, the value of each feature constituting the feature information of each training dataset is normalized so as to fall into a range of 0 to 1.

The discriminant function f(x) to be determined by the determination section 3 is represented by the following Formula (1).

$$\mathrm{f}\ (\boldsymbol{x}) \ = \boldsymbol{w}^{\mathsf{T}}\phi\ (\boldsymbol{x})\ \cdots\ (\ 1\ )$$

Where, w indicates weight factor (a vector) whose components each include the weight of each feature constituting the feature information. The character x described in Formula (1) indicates the feature information (a vector) of a training dataset having welding quality A or welding quality B. $\phi(\cdot)$ is a mapping function for mapping a data point (a point at the tip of a vector) indicating feature information into the mapping space, and having a positive definiteness. Examples of the mapping function having a positive definiteness include a function of Gaussian distribution.

The computational complexity of the mapping function $\phi(\cdot)$ is enormous. To make it possible to determine the discriminant function f(x) with a small computational complexity, the present embodiment uses the discriminant function f(x) represented by the following Formula (2). In the following description, the discriminant function f(x) represents a discriminant function f(x) represented by the following Formula (2).

$$\mathrm{f}\ (\boldsymbol{x}) \ = \Sigma\ \alpha\ \mathrm{k}\ (\boldsymbol{x},\ \boldsymbol{x'})\ \cdots\ (\ 2\ )$$

Where, $\alpha$ indicates the weight of each feature constituting feature information. k(x, x') indicates a kernel function in which a matrix K whose elements are given as k(x, x') is positive semi-definite. The character x described in or after Formula (2) indicates feature information (a vector) of a training dataset having welding quality A. The character x' indicates feature information (a vector) of a training dataset having welding quality B. The matrix K whose elements are given as k(x, x') is a matrix whose elements include output values of a kernel function which are obtained when the feature information x of a training dataset having welding quality A is inputted into the kernel function k(x, x'), and output values of the kernel function which are obtained when the feature information x' of a training dataset having welding quality B is inputted into the kernel function k(x, x').

Examples of the kernel function k(x, x') where matrix K whose elements are given as the kernel function k(x, x') is positive semi-definite include the following five kernel functions (x, x').

$$\mathrm{k}\ (\boldsymbol{x},\ \boldsymbol{x'}) \ = \mathrm{f}\ (\boldsymbol{x})\ \mathrm{k}_{1}\ (\boldsymbol{x},\ \boldsymbol{x'})\ \mathrm{f}\ (\boldsymbol{x'})$$

$$k\ (\boldsymbol{x},\ \boldsymbol{x}')=q\ (k_1\ (\boldsymbol{x},\ \boldsymbol{x}'))$$

$$k\ (\boldsymbol{x},\ \boldsymbol{x}')=exp\ (k_1\ (\boldsymbol{x},\ \boldsymbol{x}'))$$

$$k\ (\boldsymbol{x},\ \boldsymbol{x}')=\boldsymbol{x}^T\boldsymbol{K}\boldsymbol{x}'$$

$$k\ (\boldsymbol{x},\ \boldsymbol{x}')=k_a\ (\boldsymbol{x_a}+\boldsymbol{x_a}')+k_a\ (\boldsymbol{x_b}+\boldsymbol{x_b}')$$

Moreover, other examples of the kernel function k(x, x') in which the matrix K whose elements are given as the kernel function k(x, x') is positive semi-definite include the sigmoid function and the Gauss function described in the following formulas.

Sigmoid function :

$$k\ (\boldsymbol{x},\ \boldsymbol{x}')=\frac{1}{1+exp\ (-\beta\boldsymbol{x}\cdot\boldsymbol{x}')}$$

Gauss function :

$$k\ (\boldsymbol{x},\ \boldsymbol{x}')=exp\ \left(\frac{-||\boldsymbol{x}-\boldsymbol{x}'||^2}{2\sigma^2}\right)$$

It is noted that in the above described exemplary seven kernel functions k(x, x'), f($\cdot$) indicates an arbitrary function, q($\cdot$) indicates a polynomial having non-negative coefficients, $k_1(\cdot, \cdot)$, $k_a(\cdot, \cdot)$, and $k_b(\cdot, \cdot)$ indicate arbitrary kernel functions, subscripts a and b indicate identifiers of training dataset, $\beta$ indicates a gain of the sigmoid function, and $\sigma$ indicates variance.

Formula (2) is derived as described below.

$$k\ (\boldsymbol{x},\ \boldsymbol{x}')=\phi\ (\boldsymbol{x})^T\phi\ (\boldsymbol{x}')=\sum_{m=1}^{d}\phi_m\ (\boldsymbol{x})\ \phi_m\ (\boldsymbol{x}')\ \cdots\ (3)$$

Defining k(x, x') as described above, the following Formula (4) will be derived.

$$k\ (\boldsymbol{x},\ \boldsymbol{x}')=\sum_{m=1}^{d}\boldsymbol{x}^m\ (\boldsymbol{x}')^m\cdots\ (4)$$

The character d indicates the number of features constituting feature information. When the number of features constituting feature information is made to be sufficiently large, the following Formula (5) will be derived from Formula (1).

$$f(\boldsymbol{x}) = \Sigma \alpha\, k(\boldsymbol{x}, \boldsymbol{x}')$$

$$= \Sigma \alpha\, \phi(\boldsymbol{x})^{\mathrm{T}} \phi(\boldsymbol{x}') \cdots (5)$$

Where, the weight factor w is represented by the following Formula (6).

$$\boldsymbol{w} = \Sigma \alpha\, \phi(\boldsymbol{x}) \cdots (6)$$

According to the definition (Formula (3)) of the kernel function k(x, x'), Formula (2) is derived from Formula (1) by using Formula (6). The discriminant function f(x) of Formula (2) is a function whose dimensional number is affected by the number of features constituting feature information of a training dataset.

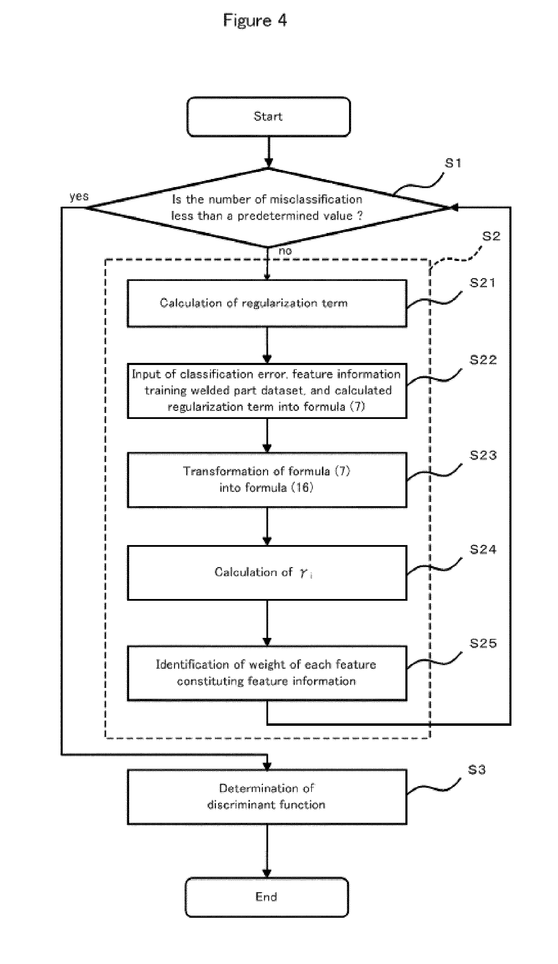

Hereafter, the procedure to determine the discriminant function f(x) will be described appropriately referring to Figure 4. The determination section 2 first classify whether or not the number of misclassification is less than a predetermined value (step S1 of Figure 4). The number of misclassification is the sum of: the number of training dataset having welding quality A, for which the absolute value of the difference between the output value of the discriminant function f(x) when the feature information x of a training dataset having welding quality A is inputted into the kernel function k(x, x') of the discriminant function f(x) (hereafter, referred to as an "output value of the discriminant function corresponding to welding quality A") and the value corresponding to welding quality B is smaller than the absolute value of the difference between the output value of the discriminant function corresponding to welding quality A and the value corresponding to welding quality A; and the number of training dataset having welding quality B, for which the absolute value of the difference between the output value of the discriminant function f(x) when the feature information x' of a training dataset having welding quality B is inputted into the kernel function k(x, x') of the discriminant function f(x) (hereafter, referred to as an "output value of the discriminant function corresponding to welding quality B") and the value corresponding to welding quality A is smaller than the absolute value of the difference between the output value of the discriminant function corresponding to welding quality B and the value corresponding to welding quality B. Moreover, upon input of the feature information x of the training dataset having welding quality A, or the feature information x' of the training dataset having welding quality B into the kernel function k(x, x') of the discriminant function f(x), the weight $\alpha$ of each feature constituting the feature information of the discriminant function f(x) is taken as an arbitrary value (for example 1). Furthermore, in the present embodiment, it is assumed that the value corresponding to welding quality A is 1, and the value corresponding to welding quality B is -1. The values corresponding to welding quality A and welding quality B are predetermined by the user of the welding quality classification apparatus 100 to be different values from each other such that welding quality A and welding quality B are identical.

When it is classified that the number of misclassification is not less than a predetermined value, the determination section 2 determines the weight $\alpha$ of each feature constituting feature information, which minimizes the value of error function that consists of the sum of the classification error and the regularization term $\alpha^{\mathrm{T}}K\alpha$ multiplied by a regularization parameter $\lambda$ (step S2 of Figure 4). The minimum value of the error function is represented by the following Formula (7).

$$\min_{\alpha} \sum_{i=1}^{n} \gamma_{cost}(\boldsymbol{y}^{(i)} f(\boldsymbol{x}^{(i)})) + \lambda\, \boldsymbol{\alpha}^{\mathrm{T}} \boldsymbol{K} \boldsymbol{\alpha} \cdots (7)$$

Where, super script (i) indicates an identifier of a training dataset. Note that the regularization parameter $\lambda$ takes on a value within a range of 0 to 1. The classification error, which is defined by the difference between the output value of the discriminant function f(x) when the feature information of a training dataset having welding quality A is inputted into the kernel function k(x, x') and the value corresponding to welding quality A, and the difference between the output value of the discriminant function f(x) when the feature information of a training dataset having welding quality B is inputted into the kernel function k(x, x') and the value corresponding to welding quality B, decreases as the absolute value of either of the two differences decreases, and increases as the absolute value increases.

The term $\gamma_{cost}$ of Formula (7) is represented by the following Formula (8).

$$\gamma_{cost} = \max\{0, \ 1 - y f(x)\} \cdots (8)$$

Formula (8) is a convex function which approximates the following Formula (9).

$$\gamma(f(x), y) = \frac{1}{2}(y - \mathrm{sgn}[f(x)])^2$$
$$= 1 - y \,\mathrm{sgn}[f(x)] = 1 - \mathrm{sgn}[y f(x)] \cdots (9)$$

The term y of Formula (9) indicates a vector whose components are weights of each feature. When the feature information of a training dataset having welding quality A is inputted into the kernel function k(x, x') to find the classification error, each component of vector y is taken as 1, and when the feature information of a training dataset having welding quality B is inputted into the kernel function k(x, x'), each component of vector y is taken as -1. The term sgn[f(x)] in Formula (9) is represented by the following Formula (10).

$$\mathrm{sgn}[f(x)] = \begin{cases} 1 & (f(x) \geqq 0) \\ \\ -1 & (f(x) < 0) \end{cases} \cdots (10)$$

The regularization term $\alpha^T K \alpha$ is represented by the following Formula (11).

$$\|w\|^2 = \sum_{i=1}^{n} \sum_{j=1}^{n} \alpha_i \alpha_j \phi(x^{(i)})^T \phi(x^{(j)})$$
$$= \alpha^T K \alpha \cdots (11)$$

Where, the subscript i indicates an identifier to represent the type of the feature constituting the feature information of a training dataset having welding quality A. The subscript j indicates an identifier to represent the type of the feature constituting the feature information of a training dataset having welding quality B.

It is seen from Formula (11) that the regularization term $\alpha^T K \alpha$ has a positive correlation with the weight $\alpha$ of each feature. The regularization term $\alpha^T K \alpha$ is derived as follows. A linear sum wo of each feature of a training dataset having welding quality A is represented by the following Formula (12).

$$w_0 = \sum_i \alpha_i \phi(x^{(i)}) \cdots (12)$$

Moreover, since the weight factor w is the sum of the linear sum wo and a $\xi$ component orthogonal to a mapped point $\phi(x^{(i)})$ which is mapping of a data point indicating the feature information of a training dataset, it is represented by the following Formula (13).

$$w = w_0 + \xi \cdots (13)$$

Where, from the condition that the inner product $\phi(x^{(j)})^T \cdot \xi$ between the weight factor w and the mapped point $\phi(x^{(j)})$ is 0, f(x) of Formula (5) is represented by the following Formula (14).

$$f(x^{(j)}) = w^T \phi(x^{(j)}) = w_0{}^T \phi(x^{(j)}) \cdots (14)$$

Thus, it is seen that the term $\gamma_{cost}$ of the left-hand side of Formula (8) is not dependent on the value of the $\xi$ component. Moreover, the following Formula (15) can be derived from the orthogonality between the linear sum wo and the $\xi$ component.

$$\lambda ||w||^2 = \lambda (||w_0||^2 + ||\xi||^2) \cdots (15)$$

From Formula (15), it is obvious that $\lambda||w||^2$ becomes a minimum value when $\xi = 0$. Therefore, it is when w = wo that the error function becomes minimum. Here, utilizing Formula (12) allows the derivation of Formula (11) from Formula (15).

From Formulas (11) and (2), the regularization term $\alpha^T K\alpha$ has a positive correlation with the dimensional number of the discriminant function f(x) of Formula (2).

Hereafter, details of the procedure to determine the weight $\alpha$ of each feature constituting the feature information that minimizes the value of the error function (step S2 of Figure 4) will be described. First, the determination section 2 inputs an arbitrary value (for example, 1) into the weight $\alpha_i$ and the weight $\alpha_j$ of Formula (11), inputs feature information of a training dataset having welding quality A into $x^{(i)}$ of Formula (11), and inputs feature information of a training dataset having welding quality B into $x^{(j)}$ to calculate the regularization term $\alpha^T K\alpha$ (step S21 of Figure 4).

Next, $\gamma_{cast}$ of the left-hand side of Formula (8) is inputted into $y^{(i)}$ of Formula (7), the feature information of each training dataset having welding quality A or welding quality B is inputted into $x^{(i)}$ of Formula (7), and the value of the regularization term $\alpha^T K\alpha$ calculated in step S21 is inputted into the regularization term $\alpha^T K\alpha$ of Formula (7) (step S22 of Figure 4). It is noted that, in this occasion, the regularization parameter of Formula (7) is an initial value and, here, the initial value is taken as 1.

Next, Formula (7) is transformed into the following Formula (16) (step S23 of Figure 4).

$$\min_{\alpha} \sum_{i=1}^{n} \xi_i + \frac{\lambda}{2} \alpha^T K\alpha \cdots (16)$$

The transformation from Formula (7) to the following Formula (16) will be described. Letting the output of the classification error for the feature information $x^{(i)}$ and the value $y^{(i)}$ be $\xi_i$, the minimum value of the output $\xi_i$ will be the minimum value defined by two inequalities (17) and (18).

$$\xi_i \geqq 0 \cdots (17)$$

$$\xi_i \geqq 1 - y^{(i)} f(x^{(i)}) = 1 - y^{(i)} \sum_{j=1}^{n} \alpha_j K_{ij} = 0 \cdots (18)$$

$$K_{ij} = k(x^{(i)}, x^{(j)})$$

The output $\xi_i$ when it becomes a minimum value is called as a slack variable, and Formula (7) is transformed into Formula (16) with Formulas (17) and (18) as constraints by introducing the output $\xi_i$ when it becomes a minimum value into Formula (7).

Formula (16) takes on a form of a convex quadratic programming problem relating to the output $\xi$ and the weight $\alpha$ of each feature constituting the feature information. Hereafter, the solution of the convex quadratic programming problem of Formula (16) will be shown.

Formula (16) is solved by using the Lagrange undefined multiplier method. The following Formula (19) is defined as Lagrangian.

Definition region: $\Omega2 \subseteq R^n$

Where, Rn indicates the entire real numbers.

Constraints: $g_i(\boldsymbol{w}) \leqq 0$, $h_i(\boldsymbol{w}) = 0$

Note that $g_i(\boldsymbol{w})$ and $h_i(\boldsymbol{w})$ indicate arbitrary functions.

Convex quadratic programming problem: min. $f(\boldsymbol{w})$, $\boldsymbol{w} \in \Omega$

$$L(\mathbf{w}, \alpha, \beta) = f(\boldsymbol{w}) + \sum_{i=1}^{k} \alpha_i g_i(\boldsymbol{w}) + \sum_{i=1}^{m} \beta_i h_i(\boldsymbol{w})$$
$$= f(\boldsymbol{w}) + \alpha' g(\boldsymbol{w}) + \beta' h(\boldsymbol{w}) \cdots (19)$$

A necessary and sufficient condition to solve the following convex quadratic programming problem using Lagrangian L(w, $\alpha$, $\beta$) is from the KKT (Karush-kuhn-Tucker) condition that $\alpha*$ and $\beta*$ that satisfy the following Formulas (20) to (24) exist.

Convex quadratic programming problem

Definition region: $\Omega \subseteq R^n$

Constraints: $g_i(\boldsymbol{w}) \leqq 0$, $h_i(\boldsymbol{w}) = 0$

Note that $g_i(\boldsymbol{w})$ and $h_i(\boldsymbol{w})$ indicate affine functions. Convex quadratic programming problem: m i n. $f(\boldsymbol{w})$, $\boldsymbol{w} \in \Omega$

$$\frac{\delta L(\boldsymbol{w}^*, \boldsymbol{\alpha}^*, \boldsymbol{\beta}^*)}{\delta \boldsymbol{w}} = 0 \cdots (20)$$

$$\frac{\delta L(\boldsymbol{w}^*, \boldsymbol{\alpha}^*, \boldsymbol{\beta}^*)}{\delta \beta} = 0 \cdots (21)$$

$$\alpha_i^* g_i(\boldsymbol{w}^*) = 0 \cdots (22)$$

$$g_i(\boldsymbol{w}^*) \leqq 0 \cdots (23)$$

$$\alpha_i^* \geqq 0 \cdots (24)$$

Where, $\alpha$ and $\beta$ indicate Lagrange multipliers in Formulas (19) to (24). The character w* indicates the weight factor when it is optimized. $\alpha*$ and $\beta*$ indicate Lagrange multipliers $\alpha$ and $\beta$ when w* is obtained.

The following Formula (25) can be derived from Formula (16) using Formula (19).

$$L(\xi, \alpha, \beta, \gamma) =$$

$$\sum_{i=1}^{n} \xi_i + \frac{\lambda}{2}\alpha^T K\alpha - \sum_{i=1}^{n}\beta_i\xi_i - \sum_{i=1}^{n}\gamma_i(\xi_i - 1 + y^{(i)}\sum_{j=1}^{n}\alpha_j K_{ij}) \cdots (25)$$

Constraints: $\beta_i \geq 0$, $\gamma_i \geq 0$

Where, $\gamma$ indicates a Lagrange multiplier.

If it is supposed that the feasible region in which an optimal solution is sought is not $\phi$ (empty set) in a general convex quadratic programming problem to minimize an objective function which is a convex function represented by the following Formula (26), the following Formula (26) is transformed into the following Formula (27).

Objective function:

$$\frac{1}{2}w^T Qw - k^T w \cdots (26)$$

Constraint: $Xw \leq c$

In from Formula (26) to the following Formula (29), Q indicates an n x n positive definite matrix, k indicates an n-vector, c indicates an m-vector, w indicates a vector to be optimized, and X indicates an m x n matrix.

$$\max_{\alpha \geq 0}\ (\min_{w}\ (\frac{1}{2}w^T Qw - k^T w + \alpha^T(Xw - c))) \cdots (27)$$

Here, the problem to determine the minimum value of w in Formula (27) constitutes an unconstrained optimization problem, and the optimal solution is represented by the following Formula (28).

$$w = Q^{-1}(k - X^T\alpha) \cdots (28)$$

Substituting the right-hand side of Formula (28) into the vector w to be optimized in Formula (26) will result in a dual problem to maximize the objective function represented by the following Formula (29) under the following constraint.

Objective function:

$$-\frac{1}{2}\alpha^T P\alpha - \alpha^T d - \frac{1}{2}k^T Qk \cdots (29)$$

Constraint: $\alpha \geq 0$

($P = XQ^{-1}X^T$, $d = c - XQ^{-1}k$)

Thus, the quadratic programming problem can be transformed into a dual problem with simpler constraints. By taking advantage of this property, it is possible to significantly reduce the computational complexity of the search of an optimal solution.

Similarly with the above described procedure, the quadratic programming problem represented by Formula (25) is led to a dual problem. First, Lagrangian L ($\xi$, $\alpha$, $\beta$, $\gamma$) with which Formula (25) is differentiated with respect to the weight $\alpha_i$ and the output $\xi_i$ is set to be 0 (see the following Formula (30)).

$$\frac{\delta L\ (\boldsymbol{\xi},\ \boldsymbol{\alpha},\ \boldsymbol{\beta},\ \boldsymbol{\gamma})}{\delta\ \alpha_i} = \sum_{i=1}^{n}\ (\lambda\ \boldsymbol{K}_{ij}\ \alpha_j - \gamma_i\ y^{(j)}\ \boldsymbol{K}_{ij})\ = 0\cdots\ (3\ 0)$$

Where, since K is a symmetric matrix, $K^T = K$, and therefore the following Formula (31) can be derived from Formula (30).

$$\lambda\ \boldsymbol{K}\boldsymbol{\alpha}-\boldsymbol{K}\hat{\boldsymbol{\gamma}}= 0\cdots\ (3\ 1)$$

Where

$$\hat{\boldsymbol{\gamma}}=\ (\hat{\gamma}_1,\ \hat{\gamma}_2,\cdots,\ \hat{\gamma}_n),\ \hat{\gamma}_1=\gamma_1\ y^{(i)},\ i=1,\cdots,\ n\cdots\ (3\ 2)$$

If it is supposed that the matrix K is positive definite, the following Formula (33) can be obtained.

$$\alpha_i=\ \frac{1}{\lambda}\ \gamma_i\ y^{(i)}\cdots\ (3\ 3)$$

When the following Formula (34) is satisfied, the output $\xi_i$ can be made as small as desired. That is, since the Lagrange function (see Formula (25)) of a dual problem becomes $-\infty$, when considering a dual problem, it is sufficient to take into account only a case in which the constraints of the following Formula (35) is included.

$$1 - \beta_i - \gamma_i \neq 0 \ \dots (34)$$

$$1 - \beta_i - \gamma_i = 0 \ \dots (35)$$

In this way, since the coefficient of a variable is 0 in a Lagrange function which is represented by a first order expression, the dual problem is irrelevant to the output $\xi_i$. Therefore, the weight $\alpha_i$ is substituted by Formula (33) to maximize the Lagrange function of the following Formula (36) under the constraint of Formula (35).

$$L_{dp}\ (\boldsymbol{\beta},\ \boldsymbol{\gamma})=\sum_{i=1}^{n}\ \gamma_i-\ \frac{1}{2\lambda}\sum_{i=1}^{n}\sum_{j=1}^{n}\ y^{(i)}\ y^{(j)}\ \gamma_i\gamma_j\boldsymbol{K}_{ij}\cdots\ (3\ 6)$$

Moreover, from the conditions $\beta_i \geq 0$ and $\gamma_i \geq 0$, the constraint of Formula (35) becomes as the following Formula (37).

$$0 \leq \gamma_i \leq 1 \ \dots (37)$$

Calculating $\gamma_i$ from Formula (36) (step S24 of Figure 4) by using a known optimization method such as a steepest descent method and an interior point method and substituting the calculated $\gamma_i$ into Formula (33) allows the determination of the weight $\alpha$ of each feature constituting feature information to minimize the error function (step S25 of Figure 4).

The determination section 2 temporarily adopts the weight $\alpha$ of each feature constituting the feature information of a training dataset, which is determined as described above, as the weight $\alpha$ of each feature constituting the feature information of training dataset of the discriminant function f(x). Then, in a similar manner as in step S1 of Figure 4, the determination section 2 calculates the number of misclassification when the determined weight $\alpha$ of each feature is temporarily adopted as the weight $\alpha$ of each feature constituting the discriminant function f(x). If the calculated number of misclassification is not less than a predetermined value, the determination section 2 makes adjustment that the regularization parameter $\lambda$ becomes smaller, and determines again the weight $\alpha$ of each feature constituting the feature information to minimize the error function as described above (step S2 of Figure 4). Moreover, in the calculation of the regularization term in step S21 after the adjustment that the regularization parameter $\lambda$ becomes smaller, the weight $\alpha$ of each feature determined in the previous step S25 is inputted into the weight $\alpha_i$ and the weight $\alpha_j$ of Formula (11). On the other hand, if the calculated number of misclassification is less than the predetermined value, it is ascertained that the determined weight $\alpha$ of each feature is adopted as the weight $\alpha$ of each feature constituting the discriminant function f(x), and the discriminant function f(x) is determined (step S3 of Figure 4).

The determination section 2 of the present embodiment, as described above, sets the initial value of the regularization parameter $\lambda$ to be the maximum value of the regularization parameter $\lambda$, and makes adjustment such that if the number of misclassification is less than the predetermined value, the regularization parameter $\lambda$ is made smaller. When the regularization parameter $\lambda$ is large, the effect of the regularization term $\alpha^T K \alpha$ on the value of the error function is large. For this reason, when the regularization parameter $\lambda$ is large, the weight $\alpha$ of each feature which makes the regularization term $\alpha^T K \alpha$ to be sufficiently small is determined as the weight $\alpha$ of each feature which minimizes the value of the error function. The dimensional number of the discriminant function f(x) and the regularization term $\alpha^T K \alpha$ have a positive correlation. For this reason, if the weight $\alpha$ of each feature which makes the regularization term $\alpha^T K \alpha$ to be sufficiently small is determined as the weight $\alpha$ of each feature that minimizes the value of the error function, and it is ascertained that the weight $\alpha$ of each feature is adopted as the weight $\alpha$ of each feature constituting the discriminant function f(x) and the discriminant function is determined, it is possible to suppress the increase in the dimensional number of the discriminant function (decision boundary), thereby allowing the suppression of over-fitting. Further, even when the weight $\alpha$ of each feature which makes the regularization term to be sufficiently small is determined, when the number of misclassification when the weight $\alpha$ of each feature is temporarily adopted as the weight $\alpha$ of each feature constituting the discriminant function f(x), it will not be ascertained that the weight $\alpha$ of each feature is adopted as the weight $\alpha$ of each feature constituting the discriminant function f(x). In this case, adjustment is made such that the regularization parameter $\lambda$ becomes smaller, and the weight $\alpha$ of each feature to minimize the value of the error function is determined again. Making the regularization parameter $\lambda$ smaller will result in that the effect of the regularization term $\alpha^T K \alpha$ on the value of the error function will decrease, while the effect of the classification error on the value of the error function will increase. For this reason, if adjustment is made such that the regularization parameter $\lambda$ becomes smaller, it becomes more possible than before the adjustment that the weight $\alpha$ of each feature that decreases the classification error is determined as the weight $\alpha$ of each feature that minimizes the value of the error function. The classification error is specified as the difference between the output value of the discriminant function corresponding to welding quality A and the value corresponding to welding quality A, and the difference between the output value of the discriminant function corresponding to welding quality B and the value corresponding to welding quality B. Further, the classification error decreases as the absolute value of either of the difference between the output value of the discriminant function corresponding to welding quality A and the value corresponding to welding quality A, and the difference between the output value of the discriminant function corresponding to welding quality B and the value corresponding to welding quality B decreases, and increases as either of them increases. That is, as the classification error decreases, either the absolute value of the difference between the output value of the discriminant function corresponding to welding quality A and the value corresponding to welding quality A, or the absolute value of the difference between the output value of the discriminant function corresponding to welding quality B and the value corresponding to welding quality B decreases. As the absolute value of the difference between the output value of the discriminant function corresponding to welding quality A and the value corresponding to welding quality A decreases, the number of training dataset having welding quality A, in which the absolute value of the difference between the output value of the discriminant function corresponding to welding quality A and the value corresponding to welding quality B becomes larger than the foregoing absolute value, decreases. Similarly, as the difference between the output value of the discriminant function corresponding to welding quality B and the value corresponding to welding quality B decreases, the number of training dataset having welding quality B, in which the absolute value of the difference between the output value of the discriminant function corresponding to welding quality B and the value corresponding to welding quality B becomes larger than the foregoing absolute value, decreases. Therefore, as the classification error decreases, the number of misclassification decreases. Thus, even when the number of misclassification when the weight $\alpha$ of each feature determined before the adjustment of the regularization parameter is temporarily adopted as the weight $\alpha$ of each feature constituting the discriminant function f(x) is not less than the predetermined value, it is possible to determine the weight $\alpha$ of each feature for which the number of misclassification becomes less than the predetermined value by making adjustment that the regularization parameter $\lambda$ is decreased, and to ascertain that the determined weight $\alpha$ of each feature is adopted as the weight $\alpha$ of each feature constituting the discriminant function, thereby determining the discriminant function f(x).

Moreover, the discriminant function f(x) represented by Formula (2) has a kernel function k(x, x') and a weight $\alpha$ for each feature constituting feature information, and does not have a mapping function. For this reason, when calculating the number of misclassification, there is no need of calculating the mapping function. In other words, there is no need of calculating a mapping function to determine a discriminant function. The computational complexity of a mapping function is enormous. For this reason, the welding quality classification apparatus 100, which does not need to calculate a mapping function to determine the discriminant function f(x), can determine the discriminant function f(x) with a small computational complexity.

The classification section 3 classifies whether the welding quality of a welded joint to be classified belongs to welding quality A or welding quality B. The classification section 3 inputs the feature information consisting of features acquired by acquisition section 1 into the kernel function k(x, x') of the discriminant function f(x) determined by the determination section 2, and calculates an output value of the discriminant function f(x), that is, a mapped point which is mapping of a data point indicating the concerned feature information to a mapping space. Then, the classification section 3 classifies that the welding quality of a welded joint to be classified is the welding quality corresponding to either of the above describe two regions, wherein the mapped point is located. To be specific, the classification section 3 compares the absolute value of the difference between the output value of the discriminant function f(x) when the feature information of a welded joint to be classified is inputted and the value corresponding to welding quality A, with the absolute value of the difference between the output value of the discriminant function f(x) and the value corresponding to welding quality B, and if the former is smaller, classifies that the welded joint to be classified belongs to welding quality A, and if the latter is smaller, that the welded joint to be classified belongs to welding quality B. In the present embodiment, since as described above, the value corresponding to welding quality A is taken as 1, and the value corresponding to welding quality B is taken as -1, the condition when the discriminant function f(x) takes a middle value between the both, that is, f(x) = 0 corresponds to the decision boundary to separate the above described mapping space.

Further, the weight of feature that has little or no effect on the output value of the discriminant function f(x) is highly likely to be determined to be 0 by the determination section 2. As described above, the determination section 2 determines the weight $\alpha$ of each feature constituting the feature information that minimizes the error function. The error function is a function that consists of the sum of the classification error and the regularization term $\alpha^{T}K\alpha$. The classification error, which is defined by the difference between the output value of the discriminant function corresponding to welding quality A and the value corresponding to welding quality A, and the difference between the output value of the discriminant function corresponding to welding quality B and the value corresponding to welding quality B, decreases as the absolute value of either of the two differences decreases, and increases as it increases. That is, the classification error varies according to the output value of the discriminant function f(x). The discriminant function f(x) varies according to the weight of feature from Formula (2). For this reason, the variation in the classification error is small when the weight of feature that has little or no effect on the output value of the discriminant function f(x) is varied. The regularization term $\alpha^{T}K\alpha$ has a positive correlation with the weight $\alpha$ of each feature. For this reason, the value of the error function consisting of the sum of the classification error and the regularization term is highly likely to decrease as the result of making the weight of feature, for which the variation of classification error is small to be a minimum (that is, 0). Thus, the weight of the feature that has little or no effect on the output value of the discriminant function f(x) is highly likely to be determined to be 0 by the determination section 2.

The feature information that is inputted into the kernel function k(x, x') of the discriminant function f(x) determined by the determination section 2 in order for the classification section 3 to classify the welding quality of a welded joint to be classified may be substituted with feature information which consists of features other than those for which the weights are determined to be 0. When such feature information is taken as the feature information to be inputted into the kernel function k(x, x') of the discriminant function f(x) determined by the determination section 2, the feature whose weight is determined to be 0 will not be inputted into the kernel function k(x, x') of the discriminant function f(x), and for that part, the computational complexity for the classification of the welding quality of a welded joint to be classified will be reduced. Such reduction in the computational complexity for the classification of the welding quality of a welded joint to be classified allows rapid classification of the welding quality of a welded joint to be classified. Further, as described above, the weight of the feature that has little or no effect on the output value of the discriminant function f(x) is highly likely to be determined to be 0. Thus, even if a feature whose weight has been determined to be 0 is not inputted into the kernel function k(x, x') of the discriminant function f(x), it is possible to perform the classification of the welding quality of a welded joint to be classified by use of the output value of the discriminant function f(x) at a certain level of accuracy or above.

Further, in the present embodiment, the classification error is represented by $\gamma$cost of Formula (8) which is a convex function. Since $\gamma$cost of Formula (8) is a convex function, it is possible to find the weight $\alpha$ to minimize the value of classification error without falling into a local solution. For this reason, it is possible to effectively determine the weight $\alpha$ to make the classification error to be less than the predetermined value.

Further, although in the present embodiment, description has been made on an example in which classification is made on to which of the two welding qualities (welding quality A and welding quality B) the welding quality of a welded joint to be classified belongs, it is also possible to classify to which of three or more welding qualities the welding quality of a welded joint to be classified belongs by repeating the above described operations of the determination section 2 and the classification section 3. For example, consider a case where the above described welding quality A is a state of good welding, and the above described welding quality B is a state of poor welding. Then, consider a case in which poor welding (welding quality B) can be further divided into either welding quality of poor welding B1 and poor welding B2. That is, consider a case in which the welding quality can be divided into any of good welding (welding quality A), poor welding B1 and poor welding B2. In this case, first in the determination section 2, a discriminant function, which indicates a decision boundary for classifying to which of good welding (welding quality A) and poor welding (welding quality B) the welding quality of a welded joint to be classified belongs, is determined by the above described procedure. The classification section 3 classifies to which of good welding (welding quality A) and poor welding (welding quality B) the welding quality of a welded joint to be classified belongs by using the discriminant function determined by the determination section 2. Next, in the determination section 2, a discriminant function, which indicates a decision boundary for classifying to which of poor welding B1 and poor welding B2 the welding quality of the welded joint to be classified which has been classified to be poor welding (welding quality B) belongs, is determined by the same procedure as described above. The classification section 3 classifies to which of poor welding B1 and poor welding B2 the welding quality of the welded joint to be classified, which has been classified to be poor welding (welding quality B) belongs by using the discriminant function determined in the determination section 3. As a result, the welded joint to be classified is classified into any of three welding qualities A, B1 or B2. By repeating a procedure similar to the above described procedure, it is possible to classify to which of four or more welding qualities the welding quality of a welded joint to be classified belongs.

As described above, further detailed categorization of poor welding (for example, categorizing poor welding for each causal factor thereof) and classifying it will achieve advantageous effects in the operation of a spot welding machine, such as that it is easy to identify a faultycause of the spot welding machine according to the classification result (according to the causal factor of poor welding), and it becomes possible to quickly adjust the spot welding machine.

On the other hand, by detailed categorizing and classifying the good welding, it can be expected that the classification accuracy of welding quality is improved. Hereafter, description will be made on this point.

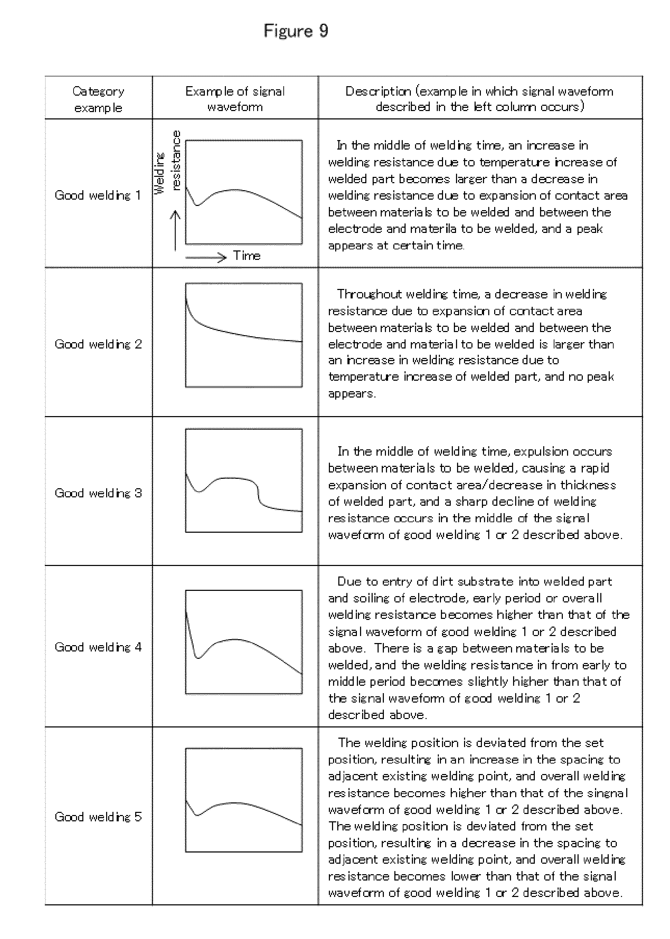

Under welding time of a spot welding machine, (1) an increase in the contact area between an electrode E1 (or E2) and a material to be welded M1 (or M2), increase and it cause and a decrease in the welding resistance due to the increase in the contact area between the material to be welded M1 and the material to be welded M2, and (2) an increase in the resistance On the other hand, (2) an increase of temperature of materials causes an increase of resistance between electrodes and these factors are compounded, thereby causing various changes in the signal waveform of resistance (signal waveform of welding voltage). To be specific, there are several patterns in the signal waveform of resistance, etc. (see Figure 9 described below) even when the welding quality is good (for example, when the nugget diameter of the welded joint is larger compared with a predetermined threshold value such as that when expulsion occurs, a characteristic change of signal waveform occurs in which resistance abruptly declines, and that when the contact area rapidly increases, the increase of resistance is suppressed. On that account, if such a special case where expulsion occurs even in a good welding is treated as having entirely the same welding quality as that of other cases of good welding (all the cases are combined together as a welding quality of good welding, and no further categorization is performed), an excessive variation will occur in the feature information of a training dataset having a welding quality of a good welding (including special cases such as where expulsion occurs) and a discriminant function (decision boundary) cannot be accurately determined, leading to a risk that the classification accuracy of the welded joint to be classified may be reduced. On that account, even if any final classification result is to be outputted to the outside in a combined form as being good welding, it is expected that the classification accuracy of welding quality is improved by configuring that good welding is further categorized (for example, categorized into cases in which expulsion occurs and does not occur) and classified at least within the welding quality classification apparatus 100.

To be specific, for example, consider a case where welding quality can be categorized into any one of good welding A1, good welding A2, poor welding B1, and poor welding B2. It can be expected that the variation of the feature information of a training dataset having a welding quality of good welding A1 and the variation of the feature information of a training dataset having a welding quality of good welding A2 are suppressed compared with the variation of feature information in a case where good welding A1 and good welding A2 are combined together as good welding. Then, first in the determination section 2, by using the feature information of a training dataset having each welding quality (good welding A1, good welding A2, poor welding B1, and poor welding B2), a discriminant function indicating a decision boundary for classifying to which of good welding A and other welding qualities (good welding A2, poor welding B1, and poor welding B2) the welding quality of a welded joint to be classified belongs is determined by the above described procedure. In this occasion, as described above, if the variation of the feature information of a training dataset having a welding quality of good welding A1 is small, it can be expected that the above described discriminant function is accurately determined. By using this discriminant function determined at the determination section 2, the classification section 3 classifies to which of good welding A1 and other welding qualities (good welding A2, poor welding B1, and poor welding B2) the welding quality of the welded joint to be classified belongs. Next, in the determination section 2, a discriminant function indicating a decision boundary for classifying to which of good welding A2 and poor welding (poor welding B1 and poor welding B2) the welding quality of the welded joint to be classified, which has been classified to belong to the other welding qualities, belongs is determined by the same procedure as described above. As described above, if the variation of the feature information of the training dataset having a welding quality of good welding A2 is small, it can be expected that the above described discriminant function is accurately determined. By using this discriminant function determined at the determination section 2, the classification section 3 classifies to which of good welding A1 and poor welding (poor welding B1 and poor welding B2) the welding quality of the welded joint to be classified, which has been classified to belong to the other welding qualities, belongs. Hereafter, classifying in the same manner to which of poor welding B1 and poor welding B2 the welded joint to be classified, which has been classified to belong to poor welding, belongs will eventually allow to classify to which of the four welding qualities A1, A2, B1, and B2 the welded joint to be classified belongs.

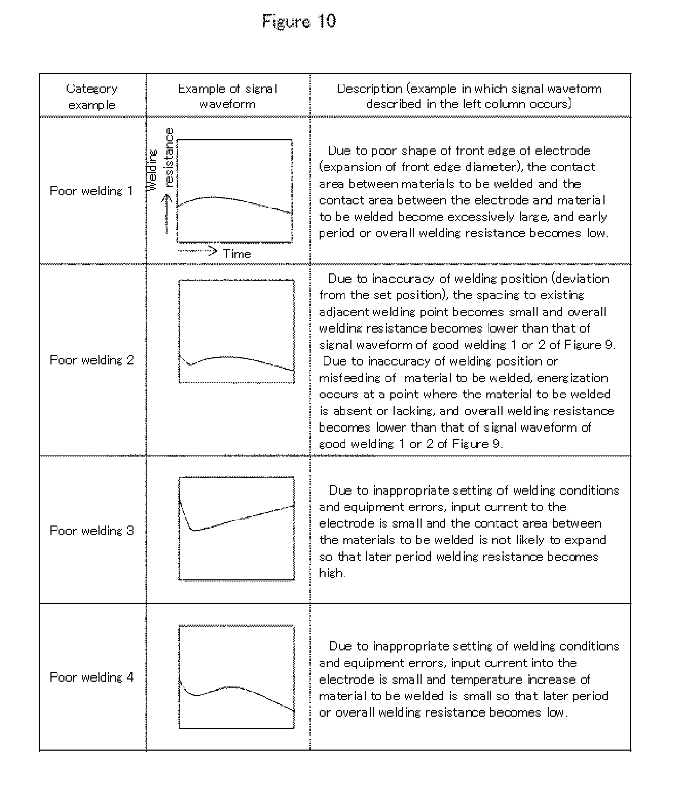

Figure 9 shows an example in which a welding quality of good welding is further categorized into a plurality of welding qualities (good welding 1 to 5). Figure 10 shows an example in which a welding quality of poor welding is further categorized into a plurality of welding qualities (poor welding 1 to 4). In the examples shown in Figures 9 and 10, it is premised that regardless of the presence or absence of the occurrence of expulsion, the corruption of electrode, and other disturbing factors, welding is regarded as good welding when the nugget diameter of a welded joint is larger than predetermined threshold value, and welding is regarded as poor welding when the nugget diameter is not more than the threshold value. However, it is possible to arbitrary categorize welding quality depending on the purpose and need; for example, by causing a welded joint, for which a signal waveform of "good welding 5" shown in Figure 9 has been obtained, to be determined by training as belonging to poor welding, it is possible to detect a case where a deviation of welding position occurs as poor welding.

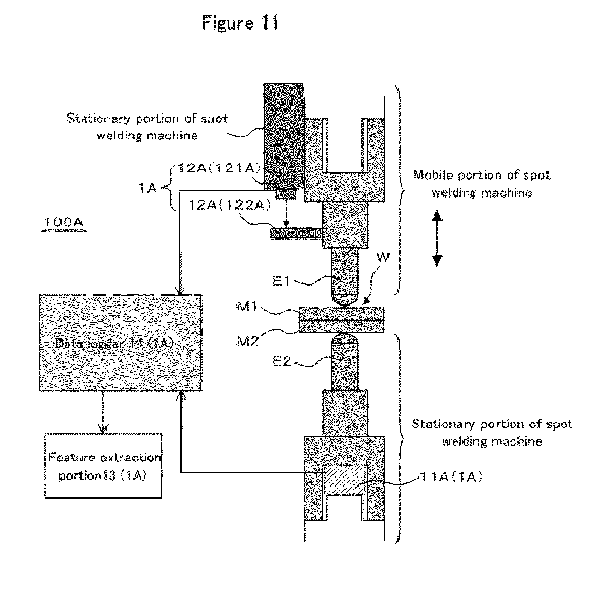

Note that while the present embodiment has been described by exemplifying a case where welding quality is classified by using welding current and welding voltage, the present invention will not be limited to such case and may be configured such that welding quality is classified by using the welding force of welding electrode and the displacement of welding electrode as shown in Figure 11.

Figure 11 is a schematic configuration drawing showing a variant of the welding quality classification apparatus relating to the present invention. As shown in Figure 11, a welding quality classification apparatus 100A relating to the present variant includes an acquisition section 1A for acquiring features, a determination section (illustration omitted) for determining a discriminant function, and a classification section (illustration omitted) for classifying welding quality, in the same way as the above described welding quality classification apparatus 100 does. Since the functions of the determination section and the classification section included in the welding quality classification apparatus 100A are the same as those of the above described welding quality classification apparatus 100, description thereof will be omitted and hereafter description will be made on the acquisition section 1A.

The acquisition section 1A includes: a load cell 11A as a detection portion for detecting the welding force of an electrode E2 when a welded joint W of materials to be welded M1 and M2 is spot welded; and a displacement meter 12A as a portion for detecting the displacement of an electrode E1 when the welded joint W of the materials to be welded M1 and M2 is spot welded. Moreover, the acquisition section 1A includes a feature extraction portion 13 and a data logger 14. The load cell 11A is disposed at a position to receive the load applied from the electrode E2 so that a change with time in the welding force of the electrode E2 during welding is measured. Moreover, the displacement meter 12A includes a displacement sensor 121A of a contact type or non-contact type, and a measurement target portion 122A which serves as the target for displacement measurement by the displacement sensor 121A. Either one of the displacement sensor 121A and the measurement target portion 122A is attached to a mobile portion (a portion that moves jointly with the electrode) of the spot welding machine, and the other one is attached to a stationary portion of the spot welding machine. In the example shown in Figure 11, the displacement sensor 121A is attached to the stationary part, and the measurement target part 122A is attached to the moving part. As the result of the displacement of the measurement target portion 122A being measured by the displacement sensor 121A (the distance between the displacement sensor 121A and the measurement target part 122A being measured), the displacement of the electrode E1 during welding is measured. The measured welding force of the electrode E2 and the displacement of the electrode E1 are inputted to the feature extraction portion 13 directly or via the data logger 14, and the feature extraction portion 13 extracts features based on the welding force of the electrode E2 and the displacement of the electrode E1. Note that although, in the present variant, description has been made on the configuration in which both the welding force of welding electrode and the displacement of welding electrode are used to classify welding quality (features are extracted based on both of them), it is also possible to classify welding quality by using only one of the both. Moreover, it is also possible to classify welding quality by combining the above described welding current and welding voltage.

Hereafter, results of a test carried out to classify welding quality (whether welding is good or poor) by using the welding quality classification apparatuses 100 and 100A relating to the present embodiment will be described.

<Classification test 1>

As shown in Figure 1, a test was carried out to classify welding quality when materials to be welded M1 and M2 made up of steel sheets (tensile strength are 270 MPa and their thickness are 0.7 mm),were placed on top of the other, and put between the electrodes E1 and E2 to be spot welded. Using a stationary spot welding machine of an air pressure type for the spot welding of materials to be welded M1 and M2, the welding force by the electrodes E1 and E2 was set to 150 kgf, and the welding current (set value) was set to 8.5 kA to perform 5 cycles of electrification per one welding point (about 80 msec in welding time, since 1 cycle is 1/60 sec). As the electrodes E1 and E2, a dome radius type electrode with a front edge having a radius of curvature of 40 mm and a diameter of 6 mm was used. As the current/ voltage measurement instrument 11, a weld checker manufactured by MIYACHI CORPORATION was used and the sampling rate was set to 0.1 msec.

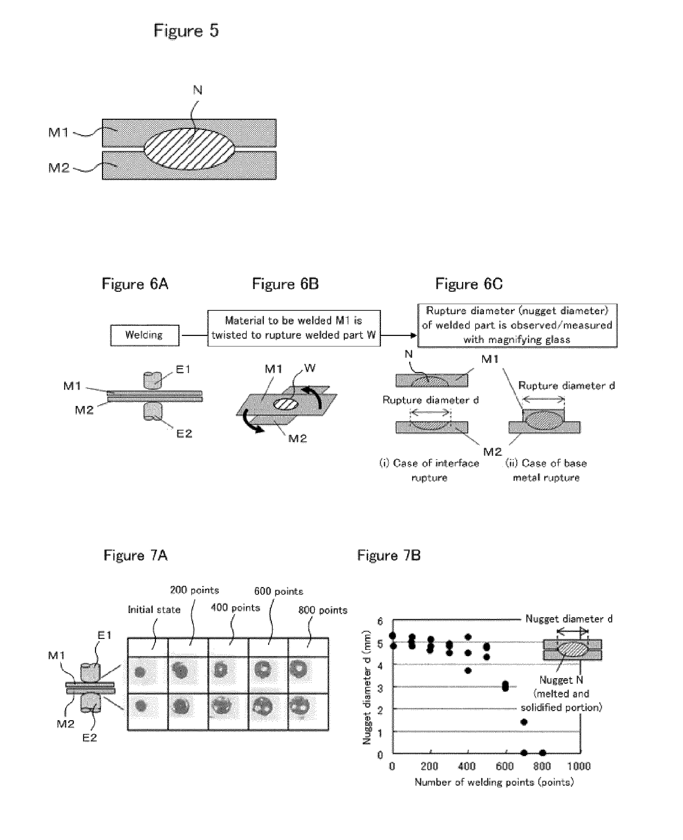

Where, an ellipsoidal melted and solidified portion N was formed centering on the interface between the materials to be welded M1 and M2 in the welded joint of the materials to be welded M1 and M2 after the electrification of the electrodes E1 and E2 as shown in Figure 5, and this portion was referred to as a nugget as described above. In the present classification test, the diameter of the nugget N (nugget diameter) was measured by the procedure described below, and actual welding quality (good/poor welding) was judged according to the magnitude of the diameter value.

Figures 6A, 6B and 6C are explanatory diagrams to explain the method of judging actual welding quality (good/poor welding). Figure 6A is schematic view of resistance spot welding of material M1 and M2. As shown in Figure 6B, welded joint W was destructed by twisting material M1. Then, as shown in Figure 6C, the destructed surface was observed with a magnifying glass to measure a destructed diameter d, which was regarded as the nugget diameter. Note that when the welded joint W is destructed, there are cases in which destruction occurs at the interface between the materials to be welded M1 and M2 as shown in (i) of Figure 6C, and in which destruction occurs in the base metal of the material to be welded M1 or M2 as shown in (ii) of Figure 6C. When a destruction occurs at the interface between the materials to be welded M1 and M2, the size of the nugget N which was externally exposed was regarded as the destructed diameter (nugget diameter) d. On the other hand, when destruction occurs in the base metal of the material to be welded M1 or M2, the size of the destructed portion of the base metal was regarded as the destructed diameter (nugget diameter) d. In the present classification test, in any of the above described destructed forms, welding quality was judged "good" when the nugget diameter d exceeded 2.5 mm, and "poor" when the nugget diameter was not more than 2.5 mm.

Figures 7A and 7B are diagrams showing an example of the wear of electrodes and the change in the nugget diameter of the welded joint in spot welding. Figure 7A shows a change in the contact state between the electrode and the material to be welded, and Figure 7B shows a change in the nugget diameter of welded joint. Note that the contact state between the electrode and the material to be welded was observed by pressing transfer paper which placed between the electrode and the material to be welded each time when a predetermined number of welding were completed. As shown in Figure 7A, as the number of welding points increased, the contact area between the electrode E1, E2 and the material to be welded M1, M2 increased. Then, after several hundreds of welding points, the contact state became unstable, such as that the contact area became a donut shape. In association with this, as shown in Figure 7B, the nugget diameter d obtained at the same welding condition changed and decreased after a while, it became that no nugget N was formed. The method to judge welding quality (good/poor welding) based on the measurement result of nugget diameter by the destructive test so far described was commonly used and also used in the present classification test for the judgment of welding quality of a training dataset, and the evaluation of the classification result of the welding quality classification apparatus 100.

Where, since the measurement of nugget diameter by the destructive test contains measurement errors, there is a risk that the classification result of actual welding quality of a welded joint particularly around the judgment threshold (for example, 2.5 mm) becomes ambiguous. On that account, in the welding quality classification apparatus 100 relating to the present embodiment which utilizes a training dataset based on the measurement result of nugget diameter by a destructive test as well, there is a risk that ambiguity remains in the classification result. Accordingly, the welding quality classification apparatus 100 (classification section 3) relating to the present embodiment is configured to calculate, in addition to the welding quality (good/poor welding) of a welded joint to be classified, a certainty factor of the classification result. The certainty factor is represented by a linear distance between a mapping point obtained by mapping a data point representing feature information of a welded joint to be classified to a mapping space and a decision boundary to separate the mapping space, and specifically represented by $D_1$ of the following Formula (38):

$$D_1 = |y\mathbf{w}^T \phi(\mathbf{x}^{(i)})| / ||\mathbf{w}|| \quad \ldots (38)$$

In the above described Formula (38), the subscript 1 indicates an identifier of a welded joint to be classified. Moreover, y indicates a vector whose each component is 1 if a discriminant function $f(x) \geq 0$ when the feature information of the welded joint to be classified is inputted, and indicates a vector whose each component is -1 if the above described discriminant function $f(x) < 0$.

The certainty factor $D_1$ represented by the above described Formula (38) can be a value from 0 to 1. Where, it is supposed that, for example, a region where the discriminant function $f(x) \geq 0$ corresponds to good welding, and the region where the discriminant function $f(x) < 0$ corresponds to poor welding. At this moment, if the discriminant function $f(x) \geq 0$ when the feature information of a welded joint to be classified is inputted and its certainty factor $D_1 = 1$, the welding quality of the welded joint to be classified is classified to be good welding, meaning that the certainty of the classification result (good welding) is 100% (the certainty of being poor welding is 0%). The certainty (%) of a classified result is represented by $(0.5 \times D_1 + 0.5) \times 100$. Moreover, if the discriminant function $f(x) \geq 0$ when the feature information of a welded joint to be classified is inputted, and its certainty factor $D_1 = 0$, the welding quality of the welded joint to be classified is classified to be good welding, meaning that the certainty of the classification result (good welding) is 50%. Similarly, if the discriminant function $f(x) < 0$ when the feature information of a welded joint to be classified is inputted, and its certainty factor $D_1 = 1$, the welding quality of the welded joint to be classified is classified to be poor welding, meaning that the certainty of the classification result (poor welding) is 100%. Moreover, if the discriminant function $f(x) < 0$ when the feature information of a welded joint to be classified is inputted, and its certainty factor $D_1 = 0$, the welding quality of the welded joint to be classified is classified to be poor welding, meaning that the certainty of the classification result (poor welding) is 50%.

As described so far, configuring to calculate, along with the welding quality of a welded joint to be classified which has been classified, the certainty factor of the classification result of the welded joint to be classified makes it possible, for example, when welding quality is classified to be good welding, but the certainty factor thereof is low (not more than a predetermined threshold), to perform re-inspection of welding quality by means of another apparatus, or to indiscriminately regard the welding quality to be in a poor welding state, thereby preventing the risk of a poorly welded product being delivered.

In the present classification test, 60 sets of materials to be welded were welded, in which welded joints of 41 sets of materials to be welded were used as a training dataset, and welded joints of the remaining 19 sets of materials to be welded were used as welded joints to be classified. In the present classification test, as described above, fractal dimensions of signal waveforms of welding current and welding voltage were used as features, and actual welding qualities of the training dataset were evaluated by a destructive test.

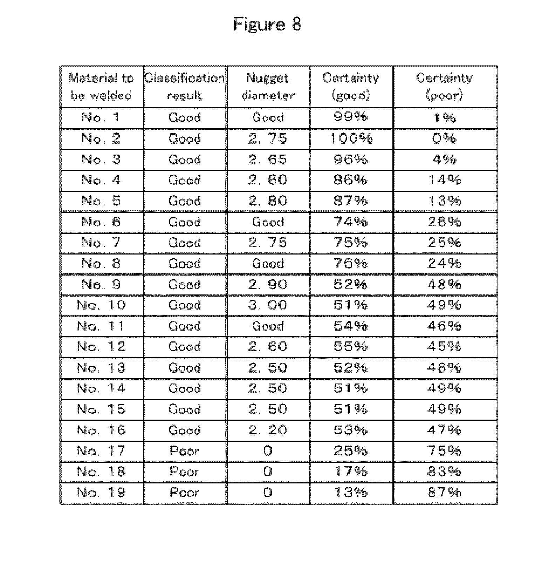

Figure 8 shows evaluation results of the present classification test. The "classification result" shown in Figure 8 indicates the classification results by the welding quality classification apparatus 100, and the "nugget diameter" indicates measurement results of nugget diameter by the destructive test. Moreover, Figure 8 also shows the certainty $(= (0.5 \times D_1 + 0.5) \times 100)$ on each classification result of "good/poor" calculated by the welding quality classification apparatus 100.

As shown in Figure 8, it is seen that according to the welding quality classification apparatus 100 relating to the present embodiment, classification results in agreement with the "good/poor" judgment by nugget diameter have been obtained excepting materials to be welded (No. 13 to No. 16) around a threshold value (2.5 mm) for "good/poor" judgment by the nugget diameter of welded joint. Moreover, it is seen that in the above described materials to be welded around the threshold value for "good/poor" judgment by the nugget diameter of welded joint, the certainty of classification result is about 50% for both "good/poor", resulting in a subtle classification result in distinguishing good/poor regions.

<Classification test 2>

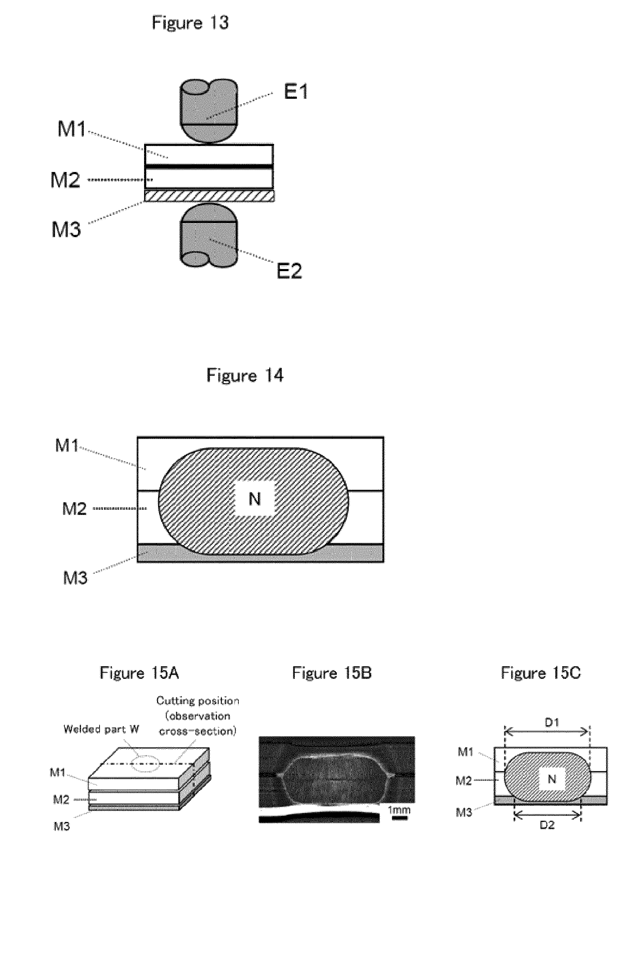

In the present classification test as well, the welding quality classification apparatus 100 having the configuration shown in Figure 1 was used. However, in the present classification test, as shown in Figure 13, welding quality was classified when a material to be welded consisting of a total of 3 sheets, 2.0mm thick high strength steel sheets (590MPa in tensile strength) were used as material M1 and M2. And 0.7mm thick mild steel sheet (270MPa in tensile strength) was used as material M3. Using a servo-compression type spot welding machine with a direct-current power source for the spot welding of the materials to be welded M1, M2, and M3, welding is performed for an electrification time of 417 msec per one welding point with the welding force by the electrodes E1 and E2 being set to 3.2 kN and the welding current (set value) to 7.8 kA. As the electrodes E1 and E2, a dome radius type electrode with a front edge having a radius of curvature of 40 mm and a diameter of 6 mm was used. As the current/voltage measurement instrument 11, a weld checker manufactured by MIYACHI CORPORATION was used and the sampling rate was set to 0.38 msec.

Where, an ellipsoidal melted and welded metal (nugget) N was formed in the welded joint of the materials to be welded M1, M2 and M3 after the electrification of the electrodes E1 and E2 as shown in Figure 14. In the present classification test, the diameter of each part of the nugget N (nugget diameter) was measured by the procedure described below, and actual welding quality (good/poor welding) was judged according to the magnitude of the diameter value.

Figures 15A, 15B and 15C are explanatory diagrams to explain the method of judging actual welding quality (good/poor welding). As shown in Figure 15A, the welded materials to be welded M1, M2, and M3 were cut such that a cross section passing through the center of the welded point W was able to be observed, and was polished and etched. An example of cross-sectional photograph after etching is shown in Figure 15B, and its schematic diagram is shown in Figure 15C. As shown in Figure 15C, the diameter of the nugget N in the interface between the material to be welded M1 and the material to be welded M2 was defined to be a nugget diameter D1, and the diameter of the nugget N in the interface between the material to be welded M2 and the material to be welded M3 was defined to be a nugget diameter D2 so that each of the nugget diameters was measured. In the present classification test, when the nugget diameter D1 exceeded 5.5 mm (corresponding to 4 times the square root of the thickness of the material to be welded M1, M2), and also the nugget diameter D2 exceeded 3.3 mm (corresponding to 4 times the square root of the thickness of the material to be welded M3), welding was judged "good", and when either one of the nugget diameters D1 and D2 did not satisfy the above described condition, welding was judged "poor".

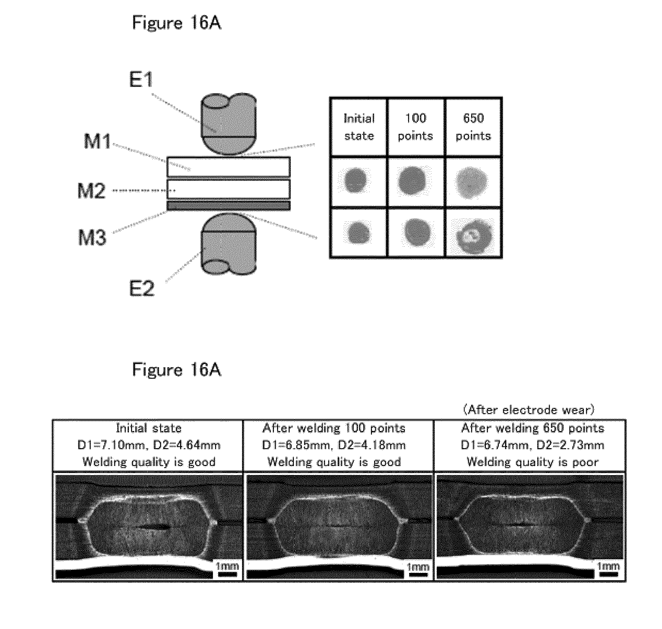

Figures 16A and 16B are diagrams showing an example of the wear of electrode and the change in the nugget formation state of welded joint in spot welding. Figure 16A shows cross sections of welded points the change in the contact state between the front edge of electrode and the material to be welded, and Figure 16B shows the change in the nugget diameters D1 and D2 of welded joint. As shown in Figure 16A, as the number of welding points increased, the contact area between the electrodes E1, E2 and the material to be welded M1, M3 increased. In conjunction with this, as shown in Figure 16B, the nugget diameters D1 and D2 to be obtained at the same welding condition changed, and the nugget diameter D2 became short of the above described 3.3 mm.

The measurement results of the nugget diameter by the cross-sectional observation so far described were used for the judgment of welding quality of a training dataset, and the evaluation of the classification results of the welding quality classification apparatus 100.

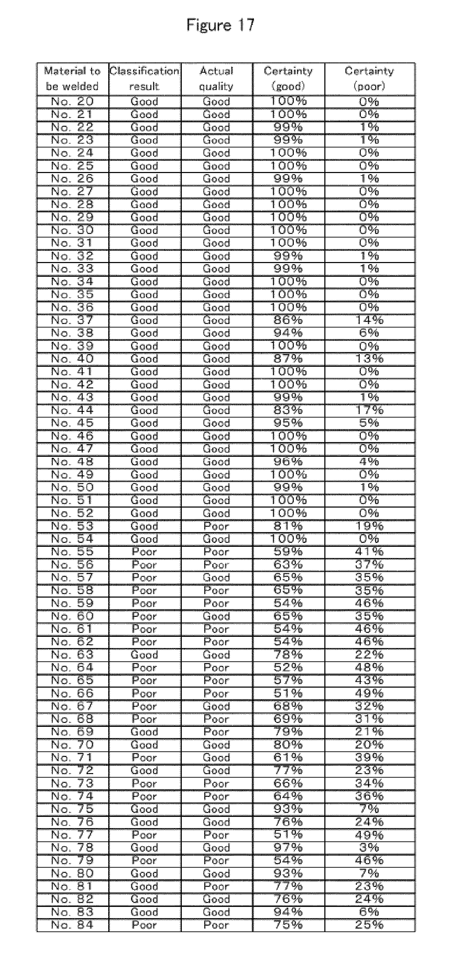

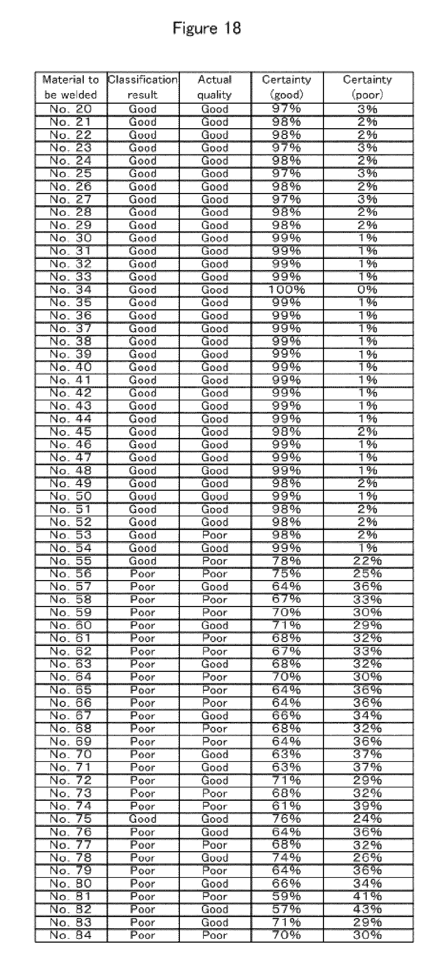

In the present classification test, welding qualities of welded joints of 65 sets of materials to be welded were evaluated by a cross validation method. To be specific, 65 sets of materials to be welded were divided into a first group (22 sets), a second group (22 sets), and a third group (21 sets), and when the welded joints of the materials to be welded in the first group were used as the welded joints to be classified, the welded joints of the materials to be welded of the second and third groups were used as the training dataset. Similarly, when the welded joints of the materials to be welded of the second group were used as the welded joints to be classified, the welded joints of the materials to be welded of the first and third groups were used as the training dataset, and when the welded joints of the materials to be welded of the third group were used as the welded joints to be classified, the welded joints of the materials to be welded of the first and second groups were used as the training dataset. In the present classification test, classification was performed in both cases where coefficient parameters of an approximating curve of signal waveform of welding voltage and the above described parameters $\mu$, $\sigma$ and $\gamma$ were used as features (the results thereof are shown Figure 17 described below), and where fractal dimensions of the signal waveform of welding voltage were used as features (the results thereof are shown Figure 18 described below). Moreover, actual welding quality of the training dataset was evaluated by the above described cross-sectional observation.

Figure 17 shows the evaluation results of the present classification test in the case where coefficient parameters of an approximating curve of signal waveform of welding voltage and the above described parameters $\mu$, $\sigma$, and $\gamma$ were used as features. The "classification result" shown in Figure 17 indicates classification results by the welding quality classification apparatus 100, and the "actual quality" indicates evaluation results of actual welding quality by the cross-sectional observation. The "certainty" shown in Figure 17 is synonymous with that shown in Figure 18.

As shown in Figure 17, it is seen that classification results in agreement with the actual "good/poor" judgment have been obtained excepting seven materials to be welded (Nos. 53, 57, 60, 67, 69, 71, and 81).

Figure 18 shows the evaluation results of the present classification test in the case where fractal dimensions of signal waveform of welding voltage were used as features. The "classification result", "actual quality", and "certainty" shown in Figure 18 are synonymous with those shown in Figure 17.

As shown in Figure 18, it is seen that classification results in agreement with the actual "good/poor" judgment have been obtained excepting 14 materials to be welded (Nos. 53, 55, 57, 60, 63, 67, 70 to 72, 76, 78, 80, 82, and 83).

Comparing the evaluation results shown in Figure 17 to the evaluation results shown in Figure 18, as to a so-called three-sheet welding, it is seen that more excellent classification accuracy can be obtained in the case where coefficient parameters of an approximating curve of signal waveform and the parameters $\mu$, $\sigma$ and $\gamma$, which are conceivably to be able to represent the information of signal waveform in more detail, were used as features (Figure 17).

<Classification test 3>

In the present classification test, the welding quality classification apparatus 100A having the configuration shown in Figure 11 was used. However, the displacement meter 12A was not used. As shown in Figure 11, test was carried out to judge welding quality when the material to be welded M1 made up of steel sheets (tensile strength are 590 MPa and their thickness are 2.0 mm), and the material to be welded M2 made up of steel sheets (tensile strength are 270 MPa and their thickness are 0.7 mm), were placed one on top of another, and put between the electrodes E1 and E2 to be spot welded. Using a servo-compression type spot welding machine with a direct-current power source for the spot welding of the materials to be welded M1, and M2, welding is performed for an electrification time of 417 msec per one welding point with the welding force by the electrodes E1 and E2 being set to 2.5 kN and the welding current (set value) to 7.0 kA. As the electrodes E1 and E2, a dome radius type electrode with a front edge having a radius of curvature of 40 mm and a diameter of 6 mm was used. The signal waveforms of welding force outputted as voltage from the load cell 11A were collected by the data logger 14 to be inputted to the feature extraction portion 13.

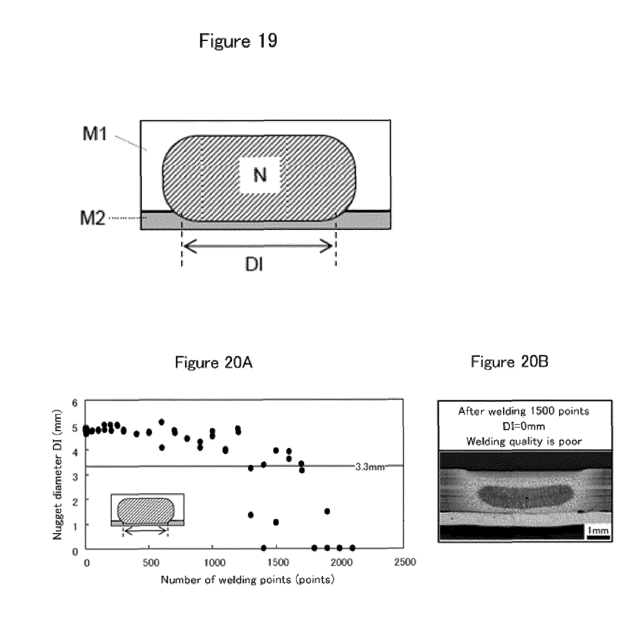

Where, an ellipsoidal nugget N was formed in the welded joint of the materials to be welded M1, and M2 after the electrification of the electrodes E1 and E2 as shown in Figure 19. In the present classification test as well, the diameter of a nugget (nugget diameter) DI in the interface between the material to be welded M1 and the material to be welded M2 was measured in the same procedure as described with reference to Figure 15. In the present classification test, when the nugget diameter DI in the above described interface exceeded 3.3 mm (corresponding to 4 times the square root of the thickness of the material to be welded M2), welding was judged "good", and when the nugget diameter DI is not more than 3.3 mm, welding was judged "poor".

Figures 20A and 20B are diagrams showing an example of the change in the nugget diameter of a welded joint in spot welding. As shown in Figure 20A, as the number of welding points increased, the nugget diameter DI to be obtained at the same welding condition changed, and the nugget diameter DI became smaller than the above described 3.3 mm. Note that as in the present test, when materials and thicknesses of the material to be welded M1 and the material to be welded M2 are different, as shown in Figure 20B, there may be cases where even if a nugget N is formed inside one of the material to be welded, the nugget diameter DI falls short of 3.3 mm in the interface between the material to be welded M1 and the material to be welded M2, and where they are not joined at all. In order to ensure the strength as a joint of spot-welded joint, since the interfaces of the materials to be welded need to be firmly joined, it is general to evaluate whether welding quality is good or bad based on the nugget diameter DI in the interfaces. The measurement results of the nugget diameter in the interface by the cross-sectional observation so far described were utilized for the judgment of welding quality of a training dataset, and the evaluation of the classification results of the welding quality classification apparatus 100A.

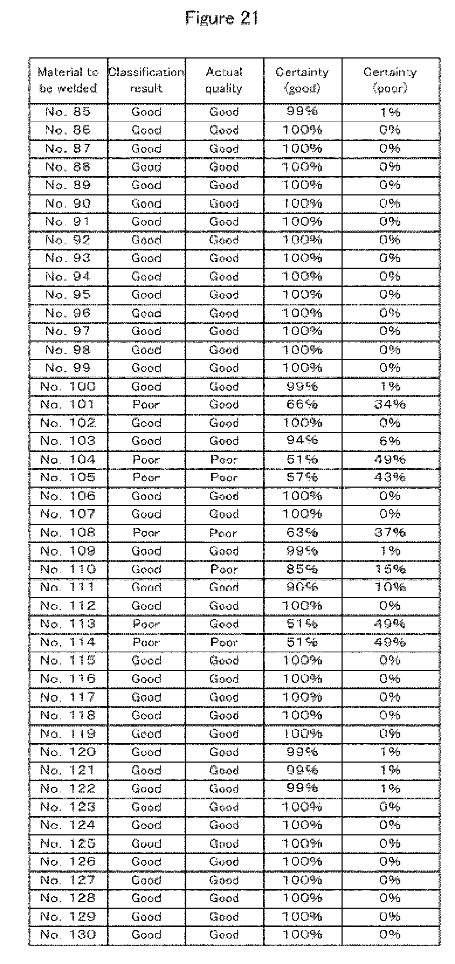

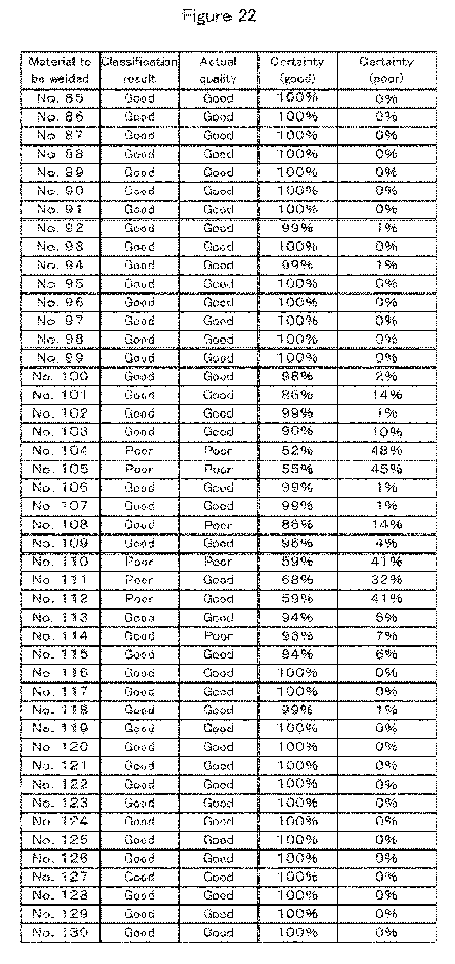

In the present classification test, welding qualities of welded joints of 46 sets of materials to be welded were evaluated by a cross validation method. To be specific, 46 sets of materials to be welded were divided into a first group (15 sets), a second group (15 sets), and a third group (16 sets), and when the welded joints of the materials to be welded in the first group were used as the welded joints to be classified, the welded joints of the materials to be welded of the second and third groups were used as the training dataset. Similarly, when the welded joints of the materials to be welded of the second group were used as the welded joints to be classified, the welded joints of the materials to be welded of the first and third groups were used as the training dataset, and when the welded joints of the materials to be welded of the third group were used as the welded joints to be classified, the welded joints of the materials to be welded of the first and second groups were used as the training dataset. In the present classification test, classification was performed in both cases where coefficient parameters of an approximating curve of signal waveform of welding voltage and the above described parameters $\mu$, $\sigma$ and $\gamma$ were used as features (the results thereof are shown Figure 21 described below), and where fractal dimensions of the signal waveform of welding voltage were used as features (the results thereof are shown Figure 22 described below). Moreover, actual welding quality of the training dataset was evaluated by the above described cross-sectional observation.

Figure 21 shows the evaluation results of the present classification test in the case where coefficient parameters of an approximating curve of signal waveform of welding voltage and the above described parameters $\mu$, $\sigma$, and $\gamma$ were used as features. The terms "classification result", "actual quality", and "certainty" shown in Figure 21 are synonymous with those shown in Figures 17 and 18.

As shown in Figure 21, it is seen that classification is matched to the actual "good/poor" judgment have been obtained excepting three materials to be welded (Nos. 101, 110, and 113).

Figure 22 shows the evaluation results of the present classification test in the case where fractal dimensions of signal waveform of welding voltage were used as features. The "classification result", "actual quality", and "certainty" shown in Figure 22 are synonymous with those shown in Figure 21.

As shown in Figure 22, it is seen that classification results is matched to the actual "good/poor" judgment have been obtained excepting 4 materials to be welded (Nos. 108, 111, 112, and 114).

Comparing the evaluation results shown in Figure 21 with those shown in Figure 22, the same level of excellent classification accuracy was able to be obtained even when either type of features were used.

[Reference Signs List]

| 1 | Acquisition section |
| 2 | Determination section |
| 3 | Classification section |
| 11 | Current/voltage measurement instrument |
| 12 | Coil |
| 13 | Feature extraction means |
| 100 | Welding quality classification apparatus |
| E1, E2 | Electrode |
| M1, M2 | Material to be welded |
| S1, S2 | Shank |
| W | Welded joint |

**Claims**

1. A welding quality classification apparatus in which a data point indicating feature information whose components include a plurality of features, the plurality of features being obtained based on at least one of physical quantities including welding current, welding voltage, welding force of welding electrode, and displacement of welding electrode when a welded joint to be classified whose welding quality is unknown is welded, is mapped to a point in a mapping space which has a dimensional number higher than the number of the features constituting the feature information, and determination is made as to which of regions of two welding qualities, which are formed by separating the mapping space, contains the mapped point to classify the welding quality of the welded joint to be classified to be a welding quality corresponding to the region where the mapped point is located, the welding quality classification apparatus comprising:

   an acquisition section for acquiring the features; a determination section for determining a discriminant function indicating a decision boundary which separates the mapping space; and a classification section for classifying the welding quality of the welded joint to be classified based on an output value of the discriminant function when the feature information of the welded joint to be classified is inputted into the discriminant function determined by the determination section;
   wherein
   the acquisition section comprises a detection portion for measuring at least one of physical values including welding current, welding voltage, welding force of welding electrode, and displacement of welding electrode when the welded joint to be classified is welded, and a feature extraction portion for extracting the features based on physical values measured by the measurement portion,
   each of the two welding qualities is a predetermined and mutually different welding quality,
   the determination section determines the discriminant function by using the feature information of a training dataset which is known to have either one of the two welding qualities,
   the discriminant function is a function that consists of a kernel function $k(x, x')$ which outputs a mapped point of a training dataset whose feature information is inputted when the feature information of the training dataset having either one or the other welding quality of the two welding qualities is inputted, and a weight of each feature constituting the feature information, which is attached to the kernel function $k(x, x')$, and
   the kernel function $k(x, x')$ is a kernel function in which a matrix K whose elements are given as $k(x, x')$ is positive semi-definite, x is the feature information of a training dataset having one of the welding qualities, and x' is the feature information of a training dataset having the other of the welding qualities, wherein
   the determination section:

   determines the weight of each feature constituting the feature information for a predetermined regularization parameter so as to minimize the value of an error function, which consists of a sum of: classification error which is defined by the difference between the output value of the discriminant function when the feature information of the training dataset having one of the welding qualities is inputted into the kernel function $k(x, x')$ and the value corresponding to the one of the welding qualities, and the difference between the output value of the discriminant function when the feature information of the training dataset having the other of the welding qualities is inputted into the kernel function $k(x, x')$ and the value corresponding to the other of the welding qualities, decreases as the absolute value of either one of the two differences decreases, and increases as the absolute value increases; and a regularization term multiplied by the regularization parameter, wherein the regularization term has a positive correlation with the dimensional number of the discriminant function, and varies according to the weight of each feature constituting the feature information, and

when the weight of each feature constituting the feature information which has been determined to minimize the value of the error function is temporarily adopted as the weight of each feature constituting the discriminant function,

if the number of misclassification, which is the sum of the number of training dataset having one of the welding qualities, for which the absolute value of the difference between the output value of the discriminant function when the feature information of a training dataset having one of the welding qualities is inputted into the kernel function k(x, x') and the value corresponding to the one of the welding qualities is smaller than the absolute value of the difference between the output value of the discriminant function when the feature information of a training dataset having one of the welding qualities is inputted into the kernel function k(x, x') and the value corresponding to the one of the welding qualities, and the number of training dataset having the other of the welding qualities for which the absolute value of the difference between the output value of the discriminant function when the feature information of a training dataset having the other of the welding qualities is inputted into the kernel function k(x, x') and the value corresponding to the one of the welding qualities is smaller than the absolute value of the difference between the output value of the discriminant function when the feature information of a training dataset having the other of the welding qualities is inputted into the kernel function k(x, x') and the value corresponding to the other of the welding qualities, is not less than a predetermined value; adjusts the regularization term parameter to determine the weight of each feature constituting the feature information again so as to minimize the value of the error function, and

if the number of misclassification is less than the predetermined value; ascertains that the weight of each feature constituting the feature information which has been determined so as to minimize the value of the error function is adopted as the weight of each feature constituting the discriminant function to determine the discriminant function.

2. The welding quality classification apparatus according to claim 1,
wherein
the classification section calculates, along with the welding quality of the welded joint to be classified which has been classified, a certainty factor of the classification result of the welded joint to be classified, the certainty factor being represented by a distance between a mapping point obtained by mapping a data point indicating feature information of the welded joint to be classified to the mapping space and the decision boundary separating the mapping space.

Figure 1

Figure 2A

Figure 2B

Figure 3

| Identifier | Feature information | | Welding quality |
| --- | --- | --- | --- |
| | Feature (Fractal dimension of welding current) | Feature (Fractal dimension of welding voltage) | |
| 001 | 0. 1 | 0. 5 | A |
| 002 | 0. 5 | 0. 1 | B |
| 003 | 0. 2 | 0. 6 | A |
| 004 | 0. 3 | 0. 5 | B |
| ⋮ | ⋮ | ⋮ | ⋮ |

Figure 4

## Figure 5

## Figure 6A

## Figure 6B

## Figure 6C

| Welding | → | Material to be welded M1 is twisted to rupture welded part W | → | Rupture diameter (nugget diameter) of welded part is observed/measured with magnifying glass |

(i) Case of interface rupture

(ii) Case of base metal rupture

## Figure 7A

## Figure 7B

Nugget N (melted and solidified portion)

Nugget diameter d

Figure 8

| Material to be welded | Classification result | Nugget diameter | Certainty (good) | Certainty (poor) |
|---|---|---|---|---|
| No. 1 | Good | Good | 99% | 1% |
| No. 2 | Good | 2. 75 | 100% | 0% |
| No. 3 | Good | 2. 65 | 96% | 4% |
| No. 4 | Good | 2. 60 | 86% | 14% |
| No. 5 | Good | 2. 80 | 87% | 13% |
| No. 6 | Good | Good | 74% | 26% |
| No. 7 | Good | 2. 75 | 75% | 25% |
| No. 8 | Good | Good | 76% | 24% |
| No. 9 | Good | 2. 90 | 52% | 48% |
| No. 10 | Good | 3. 00 | 51% | 49% |
| No. 11 | Good | Good | 54% | 46% |
| No. 12 | Good | 2. 60 | 55% | 45% |
| No. 13 | Good | 2. 50 | 52% | 48% |
| No. 14 | Good | 2. 50 | 51% | 49% |
| No. 15 | Good | 2. 50 | 51% | 49% |
| No. 16 | Good | 2. 20 | 53% | 47% |
| No. 17 | Poor | 0 | 25% | 75% |
| No. 18 | Poor | 0 | 17% | 83% |
| No. 19 | Poor | 0 | 13% | 87% |

## Figure 9

| Category example | Example of signal waveform | Description (example in which signal waveform described in the left column occurs) |
|---|---|---|
| Good welding 1 | | In the middle of welding time, an increase in welding resistance due to temperature increase of welded part becomes larger than a decrease in welding resistance due to expansion of contact area between materials to be welded and between the electrode and materila to be welded, and a peak appears at certain time. |
| Good welding 2 | | Throughout welding time, a decrease in welding resistance due to expansion of contact area between materials to be welded and between the electrode and material to be welded is larger than an increase in welding resistance due to temperature increase of welded part, and no peak appears. |
| Good welding 3 | | In the middle of welding time, expulsion occurs between materials to be welded, causing a rapid expansion of contact area/decrease in thickness of welded part, and a sharp decline of welding resistance occurs in the middle of the signal waveform of good welding 1 or 2 described above. |
| Good welding 4 | | Due to entry of dirt substrate into welded part and soiling of electrode, early period or overall welding resistance becomes higher than that of the signal waveform of good welding 1 or 2 described above. There is a gap between materials to be welded, and the welding resistance in from early to middle period becomes slightly higher than that of the signal waveform of good welding 1 or 2 described above. |
| Good welding 5 | | The welding position is deviated from the set position, resulting in an increase in the spacing to adjacent existing welding point, and overall welding resistance becomes higher than that of the singnal waveform of good welding 1 or 2 described above. The welding position is deviated from the set position, resulting in a decrease in the spacing to adjacent existing welding point, and overall welding resistance becomes lower than that of the signal waveform of good welding 1 or 2 described above. |

Figure 10

| Category example | Example of signal waveform | Description (example in which signal waveform described in the left column occurs) |
|---|---|---|
| Poor welding 1 | Welding resistance ↑ → Time | Due to poor shape of front edge of electrode (expansion of front edge diameter), the contact area between materials to be welded and the contact area between the electrode and material to be welded become excessively large, and early period or overall welding resistance becomes low. |
| Poor welding 2 | | Due to inaccuracy of welding position (deviation from the set position), the spacing to existing adjacent welding point becomes small and overall welding resistance becomes lower than that of signal waveform of good welding 1 or 2 of Figure 9. Due to inaccuracy of welding position or misfeeding of material to be welded, energization occurs at a point where the material to be welded is absent or lacking, and overall welding resistance becomes lower than that of signal waveform of good welding 1 or 2 of Figure 9. |
| Poor welding 3 | | Due to inappropriate setting of welding conditions and equipment errors, input current to the electrode is small and the contact area between the materials to be welded is not likely to expand so that later period welding resistance becomes high. |
| Poor welding 4 | | Due to inappropriate setting of welding conditions and equipment errors, input current into the electrode is small and temperature increase of material to be welded is small so that later period or overall welding resistance becomes low. |

## Figure 11

Stationary portion of spot
welding machine

12A(121A)

1A

12A(122A)

100A

Mobile portion of spot
welding machine

W

E1

M1

M2

E2

Data logger 14 (1A)

Feature extraction
portion13 (1A)

Stationary portion of spot
welding machine

11A(1A)

## Figure 12A

## Figure 12B

Figure 13

Figure 14

Figure 15A

Figure 15B

Figure 15C

Figure 16A

| | Initial state | 100 points | 650 points |
|---|---|---|---|
| | | | |
| | | | |

Figure 16A

(After electrode wear)

| Initial state<br>D1=7.10mm, D2=4.64mm<br>Welding quality is good | After welding 100 points<br>D1=6.85mm, D2=4.18mm<br>Welding quality is good | After welding 650 points<br>D1=6.74mm, D2=2.73mm<br>Welding quality is poor |
|---|---|---|
| 1mm | 1mm | 1mm |

40

Figure 17

| Material to be welded | Classification result | Actual quality | Certainty (good) | Certainty (poor) |
|---|---|---|---|---|
| No. 20 | Good | Good | 100% | 0% |
| No. 21 | Good | Good | 100% | 0% |
| No. 22 | Good | Good | 99% | 1% |
| No. 23 | Good | Good | 99% | 1% |
| No. 24 | Good | Good | 100% | 0% |
| No. 25 | Good | Good | 100% | 0% |
| No. 26 | Good | Good | 99% | 1% |
| No. 27 | Good | Good | 100% | 0% |
| No. 28 | Good | Good | 100% | 0% |
| No. 29 | Good | Good | 100% | 0% |
| No. 30 | Good | Good | 100% | 0% |
| No. 31 | Good | Good | 100% | 0% |
| No. 32 | Good | Good | 99% | 1% |
| No. 33 | Good | Good | 99% | 1% |
| No. 34 | Good | Good | 100% | 0% |
| No. 35 | Good | Good | 100% | 0% |
| No. 36 | Good | Good | 100% | 0% |
| No. 37 | Good | Good | 86% | 14% |
| No. 38 | Good | Good | 94% | 6% |
| No. 39 | Good | Good | 100% | 0% |
| No. 40 | Good | Good | 87% | 13% |
| No. 41 | Good | Good | 100% | 0% |
| No. 42 | Good | Good | 100% | 0% |
| No. 43 | Good | Good | 99% | 1% |
| No. 44 | Good | Good | 83% | 17% |
| No. 45 | Good | Good | 95% | 5% |
| No. 46 | Good | Good | 100% | 0% |
| No. 47 | Good | Good | 100% | 0% |
| No. 48 | Good | Good | 96% | 4% |
| No. 49 | Good | Good | 100% | 0% |
| No. 50 | Good | Good | 99% | 1% |
| No. 51 | Good | Good | 100% | 0% |
| No. 52 | Good | Good | 100% | 0% |
| No. 53 | Good | Poor | 81% | 19% |
| No. 54 | Good | Good | 100% | 0% |
| No. 55 | Poor | Poor | 59% | 41% |
| No. 56 | Poor | Poor | 63% | 37% |
| No. 57 | Poor | Good | 65% | 35% |
| No. 58 | Poor | Poor | 65% | 35% |
| No. 59 | Poor | Poor | 54% | 46% |
| No. 60 | Poor | Good | 65% | 35% |
| No. 61 | Poor | Poor | 54% | 46% |
| No. 62 | Poor | Poor | 54% | 46% |
| No. 63 | Good | Good | 78% | 22% |
| No. 64 | Poor | Poor | 52% | 48% |
| No. 65 | Poor | Poor | 57% | 43% |
| No. 66 | Poor | Poor | 51% | 49% |
| No. 67 | Poor | Good | 68% | 32% |
| No. 68 | Poor | Poor | 69% | 31% |
| No. 69 | Good | Poor | 79% | 21% |
| No. 70 | Good | Good | 80% | 20% |
| No. 71 | Poor | Good | 61% | 39% |
| No. 72 | Good | Good | 77% | 23% |
| No. 73 | Poor | Poor | 66% | 34% |
| No. 74 | Poor | Poor | 64% | 36% |
| No. 75 | Good | Good | 93% | 7% |
| No. 76 | Good | Good | 76% | 24% |
| No. 77 | Poor | Poor | 51% | 49% |
| No. 78 | Good | Good | 97% | 3% |
| No. 79 | Poor | Poor | 54% | 46% |
| No. 80 | Good | Good | 93% | 7% |
| No. 81 | Good | Poor | 77% | 23% |
| No. 82 | Good | Good | 76% | 24% |
| No. 83 | Good | Good | 94% | 6% |
| No. 84 | Poor | Poor | 75% | 25% |

# Figure 18

| Material to be welded | Classification result | Actual quality | Certainty (good) | Certainty (poor) |
|---|---|---|---|---|
| No. 20 | Good | Good | 97% | 3% |
| No. 21 | Good | Good | 98% | 2% |
| No. 22 | Good | Good | 98% | 2% |
| No. 23 | Good | Good | 97% | 3% |
| No. 24 | Good | Good | 98% | 2% |
| No. 25 | Good | Good | 97% | 3% |
| No. 26 | Good | Good | 98% | 2% |
| No. 27 | Good | Good | 97% | 3% |
| No. 28 | Good | Good | 98% | 2% |
| No. 29 | Good | Good | 98% | 2% |
| No. 30 | Good | Good | 99% | 1% |
| No. 31 | Good | Good | 99% | 1% |
| No. 32 | Good | Good | 99% | 1% |
| No. 33 | Good | Good | 99% | 1% |
| No. 34 | Good | Good | 100% | 0% |
| No. 35 | Good | Good | 99% | 1% |
| No. 36 | Good | Good | 99% | 1% |
| No. 37 | Good | Good | 99% | 1% |
| No. 38 | Good | Good | 99% | 1% |
| No. 39 | Good | Good | 99% | 1% |
| No. 40 | Good | Good | 99% | 1% |
| No. 41 | Good | Good | 99% | 1% |
| No. 42 | Good | Good | 99% | 1% |
| No. 43 | Good | Good | 99% | 1% |
| No. 44 | Good | Good | 99% | 1% |
| No. 45 | Good | Good | 98% | 2% |
| No. 46 | Good | Good | 99% | 1% |
| No. 47 | Good | Good | 99% | 1% |
| No. 48 | Good | Good | 99% | 1% |
| No. 49 | Good | Good | 98% | 2% |
| No. 50 | Good | Good | 99% | 1% |
| No. 51 | Good | Good | 98% | 2% |
| No. 52 | Good | Good | 98% | 2% |
| No. 53 | Good | Poor | 98% | 2% |
| No. 54 | Good | Good | 99% | 1% |
| No. 55 | Good | Poor | 78% | 22% |
| No. 56 | Poor | Poor | 75% | 25% |
| No. 57 | Poor | Good | 64% | 36% |
| No. 58 | Poor | Poor | 67% | 33% |
| No. 59 | Poor | Poor | 70% | 30% |
| No. 60 | Poor | Good | 71% | 29% |
| No. 61 | Poor | Poor | 68% | 32% |
| No. 62 | Poor | Poor | 67% | 33% |
| No. 63 | Poor | Good | 68% | 32% |
| No. 64 | Poor | Poor | 70% | 30% |
| No. 65 | Poor | Poor | 64% | 36% |
| No. 66 | Poor | Poor | 64% | 36% |
| No. 67 | Poor | Good | 66% | 34% |
| No. 68 | Poor | Poor | 68% | 32% |
| No. 69 | Poor | Poor | 64% | 36% |
| No. 70 | Poor | Good | 63% | 37% |
| No. 71 | Poor | Good | 63% | 37% |
| No. 72 | Poor | Good | 71% | 29% |
| No. 73 | Poor | Poor | 68% | 32% |
| No. 74 | Poor | Poor | 61% | 39% |
| No. 75 | Good | Good | 76% | 24% |
| No. 76 | Poor | Good | 64% | 36% |
| No. 77 | Poor | Poor | 68% | 32% |
| No. 78 | Poor | Good | 74% | 26% |
| No. 79 | Poor | Poor | 64% | 36% |
| No. 80 | Poor | Good | 66% | 34% |
| No. 81 | Poor | Poor | 59% | 41% |
| No. 82 | Poor | Good | 57% | 43% |
| No. 83 | Poor | Good | 71% | 29% |
| No. 84 | Poor | Poor | 70% | 30% |

Figure 19

Figure 20A

Figure 20B

## Figure 21

| Material to be welded | Classification result | Actual quality | Certainty (good) | Certainty (poor) |
|---|---|---|---|---|
| No. 85 | Good | Good | 99% | 1% |
| No. 86 | Good | Good | 100% | 0% |
| No. 87 | Good | Good | 100% | 0% |
| No. 88 | Good | Good | 100% | 0% |
| No. 89 | Good | Good | 100% | 0% |
| No. 90 | Good | Good | 100% | 0% |
| No. 91 | Good | Good | 100% | 0% |
| No. 92 | Good | Good | 100% | 0% |
| No. 93 | Good | Good | 100% | 0% |
| No. 94 | Good | Good | 100% | 0% |
| No. 95 | Good | Good | 100% | 0% |
| No. 96 | Good | Good | 100% | 0% |
| No. 97 | Good | Good | 100% | 0% |
| No. 98 | Good | Good | 100% | 0% |
| No. 99 | Good | Good | 100% | 0% |
| No. 100 | Good | Good | 99% | 1% |
| No. 101 | Poor | Good | 66% | 34% |
| No. 102 | Good | Good | 100% | 0% |
| No. 103 | Good | Good | 94% | 6% |
| No. 104 | Poor | Poor | 51% | 49% |
| No. 105 | Poor | Poor | 57% | 43% |
| No. 106 | Good | Good | 100% | 0% |
| No. 107 | Good | Good | 100% | 0% |
| No. 108 | Poor | Poor | 63% | 37% |
| No. 109 | Good | Good | 99% | 1% |
| No. 110 | Good | Poor | 85% | 15% |
| No. 111 | Good | Good | 90% | 10% |
| No. 112 | Good | Good | 100% | 0% |
| No. 113 | Poor | Good | 51% | 49% |
| No. 114 | Poor | Poor | 51% | 49% |
| No. 115 | Good | Good | 100% | 0% |
| No. 116 | Good | Good | 100% | 0% |
| No. 117 | Good | Good | 100% | 0% |
| No. 118 | Good | Good | 100% | 0% |
| No. 119 | Good | Good | 100% | 0% |
| No. 120 | Good | Good | 99% | 1% |
| No. 121 | Good | Good | 99% | 1% |
| No. 122 | Good | Good | 99% | 1% |
| No. 123 | Good | Good | 100% | 0% |
| No. 124 | Good | Good | 100% | 0% |
| No. 125 | Good | Good | 100% | 0% |
| No. 126 | Good | Good | 100% | 0% |
| No. 127 | Good | Good | 100% | 0% |
| No. 128 | Good | Good | 100% | 0% |
| No. 129 | Good | Good | 100% | 0% |
| No. 130 | Good | Good | 100% | 0% |

## Figure 22

| Material to be welded | Classification result | Actual quality | Certainty (good) | Certainty (poor) |
|---|---|---|---|---|
| No. 85 | Good | Good | 100% | 0% |
| No. 86 | Good | Good | 100% | 0% |
| No. 87 | Good | Good | 100% | 0% |
| No. 88 | Good | Good | 100% | 0% |
| No. 89 | Good | Good | 100% | 0% |
| No. 90 | Good | Good | 100% | 0% |
| No. 91 | Good | Good | 100% | 0% |
| No. 92 | Good | Good | 99% | 1% |
| No. 93 | Good | Good | 100% | 0% |
| No. 94 | Good | Good | 99% | 1% |
| No. 95 | Good | Good | 100% | 0% |
| No. 96 | Good | Good | 100% | 0% |
| No. 97 | Good | Good | 100% | 0% |
| No. 98 | Good | Good | 100% | 0% |
| No. 99 | Good | Good | 100% | 0% |
| No. 100 | Good | Good | 98% | 2% |
| No. 101 | Good | Good | 86% | 14% |
| No. 102 | Good | Good | 99% | 1% |
| No. 103 | Good | Good | 90% | 10% |
| No. 104 | Poor | Poor | 52% | 48% |
| No. 105 | Poor | Poor | 55% | 45% |
| No. 106 | Good | Good | 99% | 1% |
| No. 107 | Good | Good | 99% | 1% |
| No. 108 | Good | Poor | 86% | 14% |
| No. 109 | Good | Good | 96% | 4% |
| No. 110 | Poor | Poor | 59% | 41% |
| No. 111 | Poor | Good | 68% | 32% |
| No. 112 | Poor | Good | 59% | 41% |
| No. 113 | Good | Good | 94% | 6% |
| No. 114 | Good | Poor | 93% | 7% |
| No. 115 | Good | Good | 94% | 6% |
| No. 116 | Good | Good | 100% | 0% |
| No. 117 | Good | Good | 100% | 0% |
| No. 118 | Good | Good | 99% | 1% |
| No. 119 | Good | Good | 100% | 0% |
| No. 120 | Good | Good | 100% | 0% |
| No. 121 | Good | Good | 100% | 0% |
| No. 122 | Good | Good | 100% | 0% |
| No. 123 | Good | Good | 100% | 0% |
| No. 124 | Good | Good | 100% | 0% |
| No. 125 | Good | Good | 100% | 0% |
| No. 126 | Good | Good | 100% | 0% |
| No. 127 | Good | Good | 100% | 0% |
| No. 128 | Good | Good | 100% | 0% |
| No. 129 | Good | Good | 100% | 0% |
| No. 130 | Good | Good | 100% | 0% |

<table>
<tr><td colspan="2">**INTERNATIONAL SEARCH REPORT**</td><td>International application No.<br>PCT/JP2011/073379</td></tr>
</table>

A. CLASSIFICATION OF SUBJECT MATTER
*B23K11/25*(2006.01)i, *B23K31/00*(2006.01)i, *G06T3/00*(2006.01)i

According to International Patent Classification (IPC) or to both national classification and IPC

B. FIELDS SEARCHED

Minimum documentation searched (classification system followed by classification symbols)
B23K11/25, B23K31/00, G06T3/00

Documentation searched other than minimum documentation to the extent that such documents are included in the fields searched
Jitsuyo Shinan Koho 1922-1996 Jitsuyo Shinan Toroku Koho 1996-2012
Kokai Jitsuyo Shinan Koho 1971-2012 Toroku Jitsuyo Shinan Koho 1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2009-186243 A (Nippon Steel Corp.),<br>20 August 2009 (20.08.2009),<br>entire text; all drawings<br>(Family: none) | 1,2 |
| Y | JP 2008-287437 A (Canon Inc.),<br>27 November 2008 (27.11.2008),<br>entire text; all drawings<br>& US 2008/0285861 A1 | 1,2 |
| Y | WO 2008/056638 A1 (Fujifilm RI Pharma Co.,<br>Ltd.),<br>15 May 2008 (15.05.2008),<br>entire text; all drawings<br>& US 2010/0183202 A1 | 1,2 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>10 January, 2012 (10.01.12) | Date of mailing of the international search report<br>24 January, 2012 (24.01.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/073379 |

C (Continuation).　DOCUMENTS CONSIDERED TO BE RELEVANT

| Category* | Citation of document, with indication, where appropriate, of the relevant passages | Relevant to claim No. |
| --- | --- | --- |
| Y | JP 2010-214380 A　(Osaka University),<br>30 September 2010 (30.09.2010),<br>entire text; all drawings<br>(Family: none) | 1,2 |

Form PCT/ISA/210 (continuation of second sheet) (July 2009)

**REFERENCES CITED IN THE DESCRIPTION**

**Patent documents cited in the description**

- JP 2006110554 A
- JP 6170552 A
- JP 10314956 A
- JP 2003516863 A
- JP 1271078 A
- JP 7290254 A